(19)

Europäisches
Patentamt

European
Patent Office

Office européen
des brevets

(11)     **EP 2 566 121 B1**

(12)              **EUROPEAN PATENT SPECIFICATION**

(45) Date of publication and mention
of the grant of the patent:
**19.03.2014 Bulletin 2014/12**

(51) Int Cl.:
***H04L 27/26*** *(2006.01)*

(21) Application number: **11179577.9**

(22) Date of filing: **31.08.2011**

(54) **OFDM transmission and reception**

OFDM-Übertragung und -Empfang

Transmission et réception OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.03.2013 Bulletin 2013/10**

(73) Proprietor: **Lakeside Labs GmbH**
**9020 Klagenfurt (AT)**

(72) Inventors:
• **Huemer, Mario**
**4072 Alkoven (AT)**
• **Hofbauer, Christian**
**4171 St. Peter am Wimberg (AT)**
• **Huber, Johannes**
**91094 Langensendelbach (DE)**

(74) Representative: **Schenk, Markus et al**
**Schoppe, Zimmermann, Stöckeler & Zinkler**
**Patentanwälte**
**Postfach 246**
**82043 Pullach bei München (DE)**

(56) References cited:
**EP-A1- 2 337 293     US-A1- 2003 198 299**

• **MARIO HUEMER ET AL: "Unique word prefix in
SC/FDE and OFDM: A comparison", GLOBECOM
WORKSHOPS (GC WKSHPS), 2010 IEEE, IEEE,
PISCATAWAY, NJ, USA, 6 December 2010
(2010-12-06), pages 1296-1301, XP031859042,
ISBN: 978-1-4244-8863-6**
• **MARIO HUEMER ET AL: "Non-Systematic
Complex Number RS Coded OFDM by Unique
Word Prefix", IEEE TRANSACTIONS ON SIGNAL
PROCESSING, IEEE SERVICE CENTER, NEW
YORK, NY, US, vol. 60, no. 1, 1 January 2012
(2012-01-01), pages 285-299, XP011389741, ISSN:
1053-587X, DOI: 10.1109/TSP.2011.2168522**

**Description**

The present invention relates to an OFDM concept.

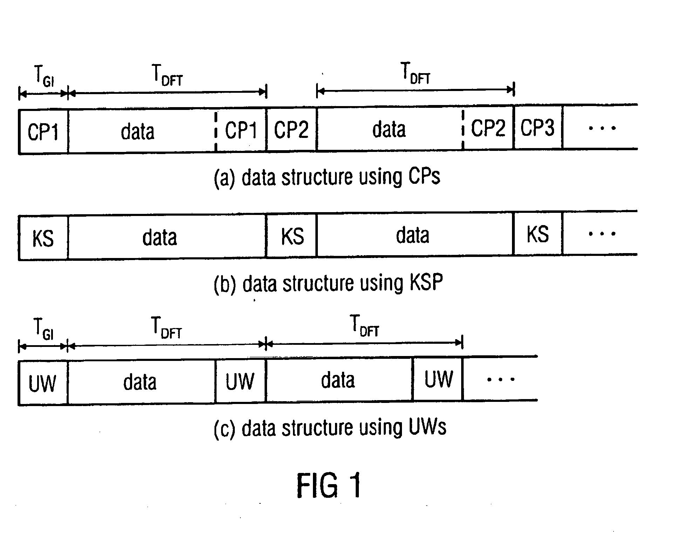

In [1], [2] an OFDM (orthogonal frequency division multiplexing) signaling scheme has been introduced, where the usual cyclic prefixes (CPs) [3] are replaced by deterministic sequences, that we call unique words (UWs). A related but - when regarded in detail - also very different scheme is KSP (known symbol padded)-OFDM [4], [5]. Fig. 1a - 1c compare the CP-, KSP-, and UW-based OFDM transmit data structures. In CP- as well as in UW-OFDM the linear convolution of the transmit signal with the channel impulse response is transformed into a cyclic convolution. However, different to the CP, the UW is part of the DFT (discrete Fourier transform)-interval as indicated in Fig. 1. Furthermore, the CP is a random sequence, whereas the UW is deterministic. Hence, the UW can optimally be designed for particular needs like synchronization and/or channel estimation purposes at the receiver side. The broadly known KSP-OFDM uses a structure similar to UW-OFDM, since the known symbol (KS) sequence is deterministic as well. The most important difference between KSP- and UW-OFDM is the fact, that the UW is part of the DFT interval, whereas the KS is not. On the one hand this characteristic of the UW implies the cyclic convolution property addressed above, and on the other hand, but no less importantly, the insertion of the UW within the DFT-interval introduces correlations in the frequency domain, which can advantageously be exploited by the receiver to improve the BER (bit error ratio) performance. Whilst in both schemes the deterministic sequences can be used for synchronization and channel estimation purposes, KSP-OFDM does not feature these correlations in frequency domain. Note that KSP-OFDM coincides with ZP-OFDM (zero padded OFDM) [6], if the KS sequence is set to zero.

In the concept described in [1], [9] it has been suggested to generate the UW-OFDM symbols by appropriately loading so-called redundant subcarriers. The minimization of the energy contribution of the redundant subcarriers, however, turned out to be a challenge. The problem has been solved by generating a zero UW in a first step, and by adding the desired UW in a separate second step. It has been shown that this approach generates OFDM symbols with much less redundant energy [2] than a single step or a direct UW generation approach as e.g. described in [18]. The positions of the redundant subcarriers were optimized to further reduce the energy contribution. Nevertheless, there is still a need for an improved UW-OFDM concept according to which the ratio between the energy available for transmission of data symbols and the energy reserved for the redundancy necessary to achieve the UW in the OFDM time domain symbol is shifted from redundancy towards data symbols.

EP 2 337 293 A1 relates to an OFDM encoder for the modulation of data symbols on a first portion of a set of orthogonal sub-carriers in the frequency range which together form OFDM symbols in the time range, using means for modulating a second portion of the set of sub-carriers depending on the first portion such that each OFDM-Symbol comprises at least one given section which is at one end of the OFDM symbol. The document further relates to methods for encoding and decoding signals consisting of such OFDM symbols and to such an OFDM signal.

Accordingly, it is an object of the present invention to provide an OFDM concept of the UW-OFDM type, i.e. an OFDM concept according to which the OFDM time domain symbols each comprise a predetermined portion of a predetermined value independent from the data symbols carried by the OFDM time domain symbols, so that the data transmission efficiency is increased. This object is achieved by the subject matter of the pending independent claims.

It is a main idea underlying the present invention that a more efficient OFDM concept of the UW-OFDM type may be obtained if the systematic subdivision of the frequency domain subcarriers into ones representing redundant subcarriers and ones representing data subcarriers is given up, and a non-systematic mapping function such as a non-systematic generator matrix is used instead in order to map the data symbols onto the frequency domain samples.

Advantageous implementations are the subject of the dependent claims. Preferred embodiments of the present application are described in more detail below with respect to the figures, among which

Fig 1      shows a schematic diagram of a transmit data structure using a CP (a), a KS (b) or a UW (c);

Fig. 2     shows a graph of a mean power (y axis) of individual subcarrier symbols (x axis) for the UW OFDM approach according to Fig. 1c;

Fig. 3     schematically shows a code word generator for the systematic code described by **G** of the UW OFDM approach according to Fig. 1c;

Fig. 4     shows a graph of a mean power (y axis) of individual subcarrier symbols (x axis) for a non-systematic generator matrix UW OFDM approach according to an embodiment;

Fig. 5     shows a block diagram of an OFDM transmitter according to an embodiment;

Fig. 6     shows a block diagram of an OFDM receiver according to an embodiment;

Fig. 7     shows a graph of a power spectral density comparing the cases of CP-OFDM, UW-OFDM using **G** (systematic coded), $\breve{\mathbf{G}}'$ (non-systematic coded - case 1) and $\breve{\mathbf{G}}''$ (non-systematic coded - case 2);

Fig. 8     shows a graph of comparing the cases of the UW-OFDM approaches (**G** and $\breve{\mathbf{G}}'$ and the CP-OFDM system in the AWGN channel (QPSK);

Fig. 9     shows a graph of BER comparing the cases of the UW-OFDM approaches (**G** and $\breve{\mathbf{G}}'$) and the CP-OFDM system in a frequency selective environment w/o outer coding (QPSK);

Fig. 10    shows a graph of BER comparing the cases of the UW-OFDM approaches (**G** and $\breve{\mathbf{G}}'$) and the CP-OFDM system in a frequency selective environment with additional outer coding (QPSK);

Fig. 11    shows a graph of BER comparing the cases of the UW-OFDM approaches (**G** and $\breve{\mathbf{G}}'$) and the CP-OFDM system in a frequency selective environment with additional outer coding and 16QAM as modulation alphabet;

Fig. 12    shows a graph of BER comparing the cases of the different non-systematic coded UW-OFDM systems: $\breve{\mathbf{G}}'$ versus $\breve{\mathbf{G}}''$ (QPSK); and

Fig. 13    shows a graph of BER in order to illustrate an impact of imperfect channel estimation on the BER performance of CP-OFDM and non-systematic coded UW-OFDM (**G'**) in a frequency selective environment with additional outer coding (QPSK).

Before describing embodiments of the present application in more detail below, an introduction into the general UW-OFDM concept is provided first. As already described above in the introductory portion of the present application, the UW-OFDM concept has already been proposed, for example, in [1] and in order to help understand the way the embodiments of the present application described further below enhance the UW-OFDM concept, the UW-OFDM concept is not only described in general, but also with specific reference to the implementation according to (1).

Since UW-OFDM time domain symbols contain a block of fixed samples, i.e. the UW, the set of all corresponding vectors in discrete frequency domain forms a coset to a Reed Solomon code (RS code). Usually RS codes of length $n$ are defined for a finite field $\mathbb{F}_Q$ using an element $w \in \mathbb{F}_Q$ of order $n$, $n \cdot l = Q\text{-}1$, with $n, l, Q \in \mathbb{N}$ to define a discrete Fourier transform $\mathbb{F}_Q^n \rightarrow \mathbb{F}_Q^n$ in $\mathbb{F}_Q$. The set of codewords is specified by the fact, that the (inverse) DFT of all codewords contains a block of $d_{min}$-1 successive zeros, where $d_{min}$ is the minimum Hamming distance of the RS code. If this block of $d_{min}$ -1 successive symbols differs from zero, but is also fixed for all codewords, a coset code to an RS code is generated in the other domain w.r.t. this Fourier transform with the same minimum distance $d_{min}$, c.f. [7].

All these definitions apply for the field of complex numbers and a usual DFT of length n as well. Thus, in UW-OFDM the set of frequency domain data vectors is a coset code to an RS code in a quite natural way. In contrast to the usual approach using RS codes over a finite field, e.g. $\mathbb{F}_{2^8}$, for an outer code in a concatenated code scheme, in UW-OFDM we have an inner RS code over the field of complex numbers if any further channel coding scheme is applied, i.e. the OFDM guard space is here additionally exploited for redundancy of an inner channel coding scheme in a natural way. In [8] it has been shown that algebraic decoding of the introduced complex number RS code leads to solving an ill-conditioned system of equations which is extremely sensitive to noise. It turns out that the application of estimation approaches like the BLUE (best linear unbiased estimator) or the LMMSE (linear minimum mean square error) estimator, cf. [9], is much more appropriate than algebraic decoding.

For SC/FDE (single carrier/frequency domain equalization) systems [10]-[24], the benefits of UW based transmission have already sufficiently been studied [17]-[20], [22]-[23]. The introduction of UWs in SC/FDE systems is straightforward, since the data symbols as well as the UW symbols are defined in time domain. In UW-OFDM the data symbols are defined in frequency domain, whereas the UW symbols are defined in time domain, which leads to some difficulties. In [25] the similarities and differences of the UW approach for OFDM and SC/FDE have been compared.

In the concept described in [1], [9] it has been suggested to generate UW-OFDM symbols by appropriately loading so-called redundant subcarriers. The problem of minimization of the energy contribution of the redundant subcarriers has been solved by generating a zero UW in a first step, and by adding the desired UW in a separate second step. This approach generates OFDM symbols with much less redundant energy [2] than a single step or direct UW generation approach as e.g. described in [18]. The positions of the redundant subcarriers have been modified to further reduce their energy contribution. Several other attempts of applying UWs in OFDM systems can be found in the literature, e.g. in [26]-[27]. In all those approaches the guard interval and thus the UW is not part of the DFT-interval. Iin contrast to the UW-OFDM concept according to the embodiments outlined below, no coding is introduced by these schemes.

The systematic complex number RS coded UW-OFDM concept presented in [1] is shortly reviewed in Sec. I in the following. As will be shown there, this concept still suffers from a disproportionately high energy contribution of the redundant subcarriers. In [28] this problem has been tackled by increasing the number of redundant subcarriers while keeping the length of the UW constant. On the one hand this approach in fact leads to a reduction of the redundant energy contribution and to an improved BER performance, but on the other hand the bandwidth efficiency decreases compared to the original concept. In [29] another approach has been introduced that also focuses on the redundant energy contribution. Here, the reduction of the redundant energy has been achieved by allowing some systematic noise within the guard interval. This method clearly outperforms the original UW-OFDM approach, however, a remaining penalty is the fact that the UW is disturbed to some extent. In the embodiments outlined below a different and much more favorable approach is used to overcome the shortcomings of the original UW-OFDM concept. The focus is no longer primarily on the redundant energy reduction. Instead, the redundant energy is distributed over all subcarriers, and cost functions are defined that take the overall transceiver performance (including the data estimation) into account. The corresponding UW-OFDM symbol generation procedure introduces a *non*-systematic complex number RS code construction (cf. Sec. II) which can be described by appropriate code generator matrices. For the data estimation two different approaches are explicitly considered in the embodiments outlined below, namely the BLUE and the LMMSE estimator. Sec. III is dedicated to the solutions of the arising optimization problems. At first the optimization problems are solved numerically, thereafter a number of highly interesting general properties of optimum code generator matrices and the implications for the overall system approach is analytically derived. Moreover, the properties of two particular numerically found code generator matrices are discussed. In Sec. IV we show that non-systematic coded UW-OFDM can be converted into a UW-SC/FDE system by choosing a specific constructed optimum code generator matrix. Finally, simulation results are presented in Sec. V. The novel UW-OFDM approach according to the embodiments of the present invention is compared against the original systematic coded UW-OFDM concept of [1] and against a classical CP-OFDM system. As a reference system the IEEE 802.11a WLAN (wireless local area network) standard is used. The spectral advantages are discussed, and BER simulation results are presented for the AWGN channel as well as for frequency selective indoor scenarios. For the latter case, the impact of channel estimation errors on the BER performance are additionally investigated. The results highlight the advantageous properties of the embodiments of the present application.

*Notation:* Lower-case bold face variables (**a**, **b**,...) indicate vectors, and upper-case bold face variables (**A**, **B**,...) indicate matrices. To distinguish between time and frequency domain variables, we use a tilde to express frequency domain vectors and matrices ($\tilde{\mathbf{a}}$, $\tilde{\mathbf{A}}$,...), respectively. We further use $\mathbb{R}$ to denote the set of real numbers, $\mathbb{C}$ to denote the set of complex numbers, **I** to denote the identity matrix, $(\cdot)^T$ to denote transposition, $(\cdot)^H$ to denote conjugate transposition, $E[\cdot]$ to denote expectation, and tr$\{\cdot\}$ to denote the trace operator. For all signals and systems the usual equivalent complex baseband representation is applied.

## I. Review of Systematic Coded UW-OFDM

### A. Unique Word Generation

The approach of introducing unique words in OFDM time domain symbols as described in [1], [2] is briefly discussed now. Let $\mathbf{x}_u \in \mathbb{C}^{N_u \times 1}$ be a predefined sequence which we call unique word. This unique word shall form the tail of each OFDM time domain symbol vector. Hence, an OFDM time domain symbol vector, as the result of a length-$N$ -IDFT (inverse DFT), consists of two parts and is of the form $\begin{bmatrix} \mathbf{x}_d^T & \mathbf{x}_u^T \end{bmatrix}^T \in \mathbb{C}^{N \times 1}$, whereat only $\mathbf{x}_d \in \mathbb{C}^{(N-N_u) \times 1}$ is random and affected by the data. In the concept suggested in [1], [2] an OFDM symbol $\mathbf{x} = \begin{bmatrix} \mathbf{x}_d^T & \mathbf{0}^T \end{bmatrix}^T$ with a zero UW is generated in a first step, and the final transmit symbol $\mathbf{x}' = \mathbf{x} + \begin{bmatrix} \mathbf{0}^T & \mathbf{x}_u^T \end{bmatrix}^T$ is then determined by adding the desired UW in time domain in a second step. As in conventional OFDM, the QAM data symbols (denoted by the vector $\tilde{\mathbf{d}} \in \mathbb{C}^{N_d \times 1}$) and the zero subcarriers (at the band edges and at DC) are specified in frequency domain as part of the vector $\tilde{\mathbf{x}}$, but here in addition the zero-word is specified in time domain as part of the vector $\mathbf{x} = \mathbf{F}_N^{-1} \tilde{\mathbf{x}}$. Here, $\mathbf{F}_N$ denotes the length-$N$ -DFT matrix with elements $[\mathbf{F}_N]_{kl} = e^{-j\frac{2\pi}{N}kl}$ for *k, l* = 0,1, ..., *N*-1. The system of equations $\mathbf{x} = \mathbf{F}_N^{-1} \tilde{\mathbf{x}}$ with the introduced features is fulfilled by spending a set of redundant subcarriers. Let the redundant subcarrier symbols form the vector $\tilde{\mathbf{r}} \in \mathbb{C}^{N_r \times 1}$, with $N_r = N_u$. Further, a permutation matrix $\mathbf{P} \in \mathbb{C}^{(N_d + N_r) \times (N_d + N_r)}$ is introduced and an OFDM symbol (containing *N* - $N_d$ - $N_r$ zero subcarriers) in frequency domain is formed by

$$\tilde{\mathbf{x}} = \mathbf{BP} \begin{bmatrix} \tilde{\mathbf{d}} \\ \tilde{\mathbf{r}} \end{bmatrix}. \tag{1}$$

$\mathbb{B} \in \mathbb{C}^{N \times (N_d + N_r)}$ inserts the usual zero subcarriers. It consists of zero-rows at the positions of the zero subcarriers, and of appropriate unit row vectors at the positions of data subcarriers. The reason for the introduction of the permutation matrix **P** and its specific construction is detailed shortly below. The time - frequency relation of the OFDM symbol (before adding the desired UW) can now be written as

$$\mathbf{F}_N^{-1} \mathbf{BP} \begin{bmatrix} \tilde{\mathbf{d}} \\ \tilde{\mathbf{r}} \end{bmatrix} = \begin{bmatrix} \mathbf{x}_d \\ \mathbf{0} \end{bmatrix}. \tag{2}$$

With

$$\mathbf{M} = \mathbf{F}_N^{-1} \mathbf{BP} = \begin{bmatrix} \mathbf{M}_{11} & \mathbf{M}_{12} \\ \mathbf{M}_{21} & \mathbf{M}_{22} \end{bmatrix}, \tag{3}$$

where $\mathbf{M}_{ij}$ are appropriate sized sub-matrices, it follows that $\mathbf{M}_{21}\tilde{\mathbf{d}} + \mathbf{M}_{22}\tilde{\mathbf{r}} = \mathbf{0}$, and hence $\tilde{\mathbf{r}} = -\mathbf{M}_{22}^{-1}\mathbf{M}_{21}\tilde{\mathbf{d}}$. With the matrix

$$\mathbf{T} = -\mathbf{M}_{22}^{-1}\mathbf{M}_{21} \in \mathbb{C}^{N_r \times N_d}, \tag{4}$$

the vector of redundant subcarrier symbols can thus be determined by the linear mapping

$$\tilde{\mathbf{r}} = \mathbf{T}\tilde{\mathbf{d}}. \tag{5}$$

Equation (5) introduces correlations in the vector $\tilde{\mathbf{x}}$ of frequency domain samples of an OFDM symbol. The construction of **T**, and thus also the energy of the redundant subcarrier symbols, depend on the choice of **P**. The mean symbol energy $E_{x'} = E[(\mathbf{x}')^H\mathbf{x}']$ can be calculated to

$$E_{\mathbf{x}'} = \frac{1}{N} (\underbrace{N_d \sigma_d^2}_{E_{\tilde{\mathbf{d}}}} + \underbrace{\sigma_d^2 \mathrm{tr}(\mathbf{TT}^H)}_{E_{\tilde{\mathbf{r}}}}) + \underbrace{\mathbf{x}_u^H \mathbf{x}_u}_{E_{\mathbf{x}_u}}, \tag{6}$$

cf. [2]. $E_{\tilde{\mathbf{d}}}/N$ and $E_{\tilde{\mathbf{r}}}/N$ describe the contributions of the data and the redundant subcarrier symbols to the total mean symbol energy before the addition of the desired UW, respectively, and $E_{\mathbf{x}_u}$ describes the contribution of the UW. It turns out that the energy contribution $E_{\tilde{\mathbf{r}}}/N$ of the redundant subcarrier symbols almost explodes without the use of an appropriate permutation matrix, or equivalently for **P** = **I**. In [1] it has therefore been suggested to choose **P** by minimizing the symbol energy $E_{x'}$ or equivalently by minimizing the energy-based cost function

$$J_E = \frac{\sigma_d^2}{N} \mathrm{tr}\{\mathbf{TT}^H\}. \tag{7}$$

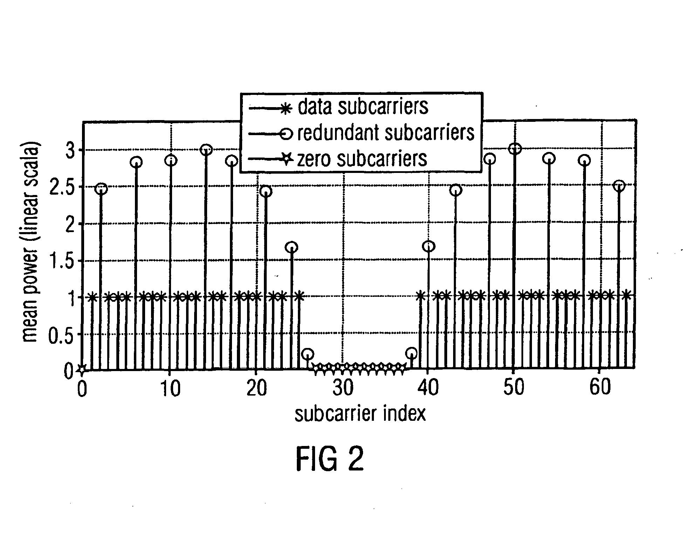

Note that **T** is derived from (3) and (4).
*Example 1:* For the parameter choice $N = 64$, $N_u = 16$, and an index set of the zero subcarriers given by {0, 27, 28,...,37} (these parameters are taken from the IEEE 802.11 a WLAN standard [30], see also Table 0), we have $N_r$ =16 and $N_d$ = 36. The optimum index set for the redundant subcarriers as a result of minimizing the cost function in (7) is {2, 6, 10, 14, 17, 21, 24, 26, 38, 40, 43, 47, 50, 54, 58, 62}, cf. [1]. This choice can easily also be described by (1) with appropriately constructed matrices **B** and **P**. We assume uncorrelated and zero mean QAM data symbols with the covariance matrix $\mathbf{C}_{\tilde{d}\tilde{d}} = \sigma_d^2 \mathbf{I}$. Fig. 2 shows the mean power values of all individual subcarrier symbols for the chosen parameter setup for the case the UW is the zero word $\mathbf{x}_u = \mathbf{0}$ and for $\sigma_d^2 = 1$. The optimized mean power values of the redundant subcarrier symbols are the elements of the vector $\sigma_d^2 \mathrm{diag}\left(\mathbf{T}\mathbf{T}^H\right)$ evaluated for the optimum permutation matrix **P**.

*B. Interpretation as a Systematic Complex Valued Reed Solomon Code*

With

$$\mathbf{G} = \mathbf{P} \begin{bmatrix} \mathbf{I} \\ \mathbf{T} \end{bmatrix} \in \mathbb{C}^{(N_d + N_r) \times N_d} \tag{8}$$

one can interpret

$$\tilde{\mathbf{c}} = \mathbf{P} \begin{bmatrix} \tilde{\mathbf{d}} \\ \tilde{\mathbf{r}} \end{bmatrix} = \mathbf{P} \begin{bmatrix} \mathbf{I} \\ \mathbf{T} \end{bmatrix} \tilde{\mathbf{d}} = \mathbf{G}\tilde{\mathbf{d}} \tag{9}$$

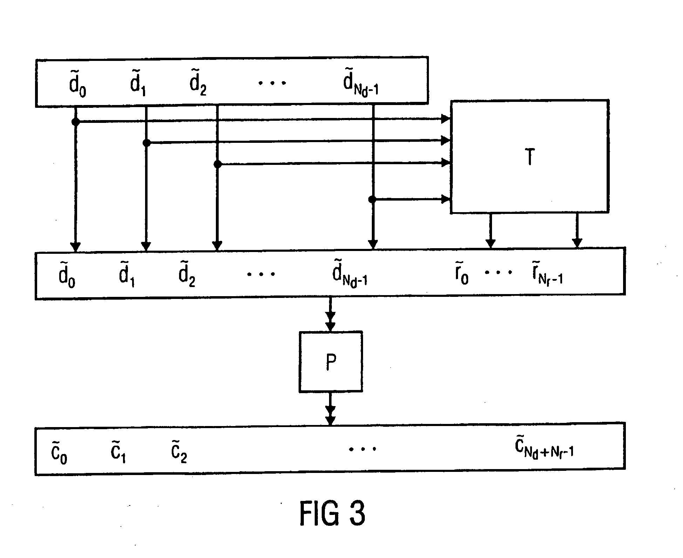

$(\tilde{\mathbf{c}} \in \mathbb{C}^{(N_d + N_r) \times 1})$ as a codeword of a *systematic* complex number Reed Solomon code construction along the subcarriers. **G** can be interpreted as the code generator matrix of this code. As already mentioned above an RS code with minimum Hamming distance $d_{min}$ may be defined as the set of codewords, which all show a block of $d_{min}$ -1 consecutive zeros in their spectral transform w.r.t. a Fourier transform defined in the (elsewhere usually finite) field from which the code symbols are taken, c.f. [7]. Here, simply time and frequency domains are interchanged and the field is the set of complex numbers. Fig. 3 graphically illustrates the generation of a code word $\tilde{\mathbf{c}} = [\tilde{c}_0, \tilde{c}_1, ..., \tilde{c}_{N_d + N_r - 1}]^T$.

Using (9), and with the frequency domain version of the UW $\tilde{\mathbf{x}}_u = \mathbf{F}_N \begin{bmatrix} \mathbf{0}^T & \mathbf{x}_u^T \end{bmatrix}^T$ the transmit symbol can now also be written as

$$\mathbf{x}' = \mathbf{F}_N^{-1}(\mathbf{B}\mathbf{G}\tilde{\mathbf{d}} + \tilde{\mathbf{x}}_u). \tag{10}$$

*C. System Model and Preparatory Steps*

After the transmission over a dispersive (e.g. multipath) channel a received OFDM time domain symbol can be modeled as

$$\mathbf{y}_r = \mathbf{H}_c \mathbf{x}' + \mathbf{n} \tag{11}$$

$$= \mathbf{H}_c \mathbf{F}_N^{-1}(\mathbf{B}\mathbf{G}\tilde{\mathbf{d}} + \tilde{\mathbf{x}}_u) + \mathbf{n}, \tag{12}$$

cf. (10), where $\mathbf{n} \in \mathbb{C}^{N \times 1}$ represents a zero-mean Gaussian (time domain) noise vector with the covariance matrix $\sigma_n^2 \mathbf{I}$, and $\mathbf{H}_c \in \mathbb{C}^{N \times N}$ denotes a cyclic convolution matrix originating from the zero-padded vector of channel impulse response coefficients $\mathbf{h}_c \in \mathbb{C}^{N \times 1}$. After applying a DFT to obtain $\tilde{\mathbf{y}}_r = \mathbf{F}_N \mathbf{y}_r$, we exclude the zero subcarriers from further operation, which leads to the down-sized vector $\tilde{\mathbf{y}}_d = \mathbf{B}^T \tilde{\mathbf{y}}_r$ with $\tilde{\mathbf{y}}_d \in \mathbb{C}^{(N_d + N_r) \times 1}$:

$$\tilde{\mathbf{y}}_d = \mathbf{B}^T \mathbf{F}_N \mathbf{H}_c \mathbf{F}_N^{-1} (\mathbf{BG}\tilde{\mathbf{d}} + \tilde{\mathbf{x}}_u) + \mathbf{B}^T \mathbf{F}_N \mathbf{n}. \qquad (13)$$

The matrix $\tilde{\mathbf{H}}_c = \mathbf{F}_N \mathbf{H}_c \mathbf{F}_N^{-1}$ is diagonal and contains the sampled channel frequency response on its main diagonal. $\tilde{\mathbf{H}} = \mathbf{B}^T \mathbf{F}_N \mathbf{H}_c \mathbf{F}_N^{-1} \mathbf{B}$ with $\tilde{\mathbf{H}} \in \mathbb{C}^{(N_d + N_r) \times (N_d + N_r)}$ is a down-sized version of the latter excluding the entries corresponding to the zero subcarriers. The received symbol can now be written in the form of the *affine* model

$$\tilde{\mathbf{y}}_d = \tilde{\mathbf{H}}\mathbf{G}\tilde{\mathbf{d}} + \tilde{\mathbf{H}}\mathbf{B}^T \tilde{\mathbf{x}}_u + \mathbf{B}^T \mathbf{F}_N \mathbf{n}. \qquad (14)$$

Note that (assuming that the channel matrix $\tilde{\mathbf{H}}$ or at least an estimate of the same is available) $\tilde{\mathbf{H}}\mathbf{B}^T\tilde{\mathbf{x}}_u$ represents the known portion contained in the received vector $\tilde{\mathbf{y}}_d$ originating from the UW. As a preparatory step to the data estimation procedure the UW influence can be subtracted to obtain the corrected symbol $\tilde{\mathbf{y}} = \tilde{\mathbf{y}}_d - \tilde{\mathbf{H}}\mathbf{B}^T\tilde{\mathbf{x}}_u$ in the form of the *linear* model

$$\tilde{\mathbf{y}} = \tilde{\mathbf{H}}\mathbf{G}\tilde{\mathbf{d}} + \tilde{\mathbf{v}}, \qquad (15)$$

with the noise vector $\tilde{\mathbf{v}} = \mathbf{B}^T\mathbf{F}_N\mathbf{n}$. The vector $\tilde{\mathbf{y}}$ serves as the input for the data estimation (or equalization) procedure. In the following linear data estimators of the form

$$\hat{\tilde{\mathbf{d}}} = \mathbf{E}\tilde{\mathbf{y}}, \qquad (16)$$

are considered, where $\mathbf{E} \in \mathbb{C}^{N_d \times (N_d + N_r)}$ describes the equalizer.

*D. Optimum Linear Data Estimators*

One way to look for an optimum data estimator is to assume the data vector to be deterministic but unknown, and to search for unbiased estimators. In order for the estimator to be unbiased we require

$$E[\hat{\tilde{\mathbf{d}}}] = E[\mathbf{E}\tilde{\mathbf{y}}] = \mathbf{E}E[\tilde{\mathbf{H}}\mathbf{G}\tilde{\mathbf{d}} + \tilde{\mathbf{v}}] = \mathbf{E}\tilde{\mathbf{H}}\mathbf{G}\tilde{\mathbf{d}} = \tilde{\mathbf{d}}. \qquad (17)$$

Consequently, the unbiased constraint takes on the form

$$\mathbf{E}\tilde{\mathbf{H}}\mathbf{G} = \mathbf{I}. \qquad (18)$$

Equ. (18) is equivalent to the ZF (zero forcing) criterion for linear equalizers. The optimum solution which is commonly known as the best linear unbiased estimator, and which is equivalent to the optimum linear ZF equalizer, is found by applying the Gauss-Markov theorem, cf. [31], to the linear model in (15). The solution is given by

$$\mathbf{E}_{\text{BLUE}} = (\mathbf{G}^H \tilde{\mathbf{H}}^H \mathbf{C}_{\tilde{v}\tilde{v}}^{-1} \tilde{\mathbf{H}} \mathbf{G})^{-1} \mathbf{G}^H \tilde{\mathbf{H}}^H \mathbf{C}_{\tilde{v}\tilde{v}}^{-1}. \tag{19}$$

We note that since the noise in (15) is assumed to be Gaussian, (19) is also the MVU (minimum variance unbiased) estimator. With the noise covariance matrix $\mathbf{C}_{\tilde{v}\tilde{v}} = E\left[ \tilde{\mathbf{v}}\tilde{\mathbf{v}}^H \right] = N\sigma_n^2 \mathbf{I}$ we obtain

$$\mathbf{E}_{\text{BLUE}} = (\mathbf{G}^H \tilde{\mathbf{H}}^H \tilde{\mathbf{H}} \mathbf{G})^{-1} \mathbf{G}^H \tilde{\mathbf{H}}^H. \tag{20}$$

The covariance matrix of $\hat{\tilde{\mathbf{d}}} = \mathbf{E}_{\text{BLUE}}\tilde{\mathbf{y}}$, or equivalently, the covariance matrix of the error $\tilde{\mathbf{e}} = \tilde{\mathbf{d}} - \hat{\tilde{\mathbf{d}}}$ immediately follows to

$$\mathbf{C}_{\tilde{e}\tilde{e}} = N\sigma_n^2 (\mathbf{G}^H \tilde{\mathbf{H}}^H \tilde{\mathbf{H}} \mathbf{G})^{-1}. \tag{21}$$

The most common linear data estimator is the LMMSE estimator which belongs to the class of the Bayesian estimators. In the Baysian approach the data vector is assumed to be the realization of a random vector instead of being deterministic but unknown as assumed above. By applying the Bayesian Gauss-Markov theorem [31] to (15), where we now assume $\tilde{\mathbf{d}}$ to be the realization of a random vector, the LMMSE equalizer follows to

$$\mathbf{E}_{\text{LMMSE}} = (\mathbf{G}^H \tilde{\mathbf{H}}^H \tilde{\mathbf{H}} \mathbf{G} + \frac{N\sigma_n^2}{\sigma_d^2}\mathbf{I})^{-1} \mathbf{G}^H \tilde{\mathbf{H}}^H. \tag{22}$$

Expression (22) shows huge similarity to the BLUE in (20). For $\sigma_n^2 = 0$ the LMMSE equalizer and the BLUE are identical. The covariance matrix of the error $\tilde{\mathbf{e}} = \tilde{\mathbf{d}} - \hat{\tilde{\mathbf{d}}}$ is given by

$$\mathbf{C}_{\tilde{e}\tilde{e}} = N\sigma_n^2 (\mathbf{G}^H \tilde{\mathbf{H}}^H \tilde{\mathbf{H}} \mathbf{G} + \frac{N\sigma_n^2}{\sigma_d^2}\mathbf{I})^{-1}. \tag{23}$$

**II. UW Generation by Optimum Non-Systematic Coding**

In Sec. I the positions of the redundant subcarriers (represented by the choice of the permutation matrix **P**) were chosen such that the redundant energy becomes minimum. For that we had to minimize the cost function $J_E$ in (7). Nevertheless, the mean power of the redundant subcarrier symbols is still considerably higher than that of the data symbols, cf. Fig. 2. The embodiments outlined below follow a novel and completely different approach to optimize the overall system performance by adapting the concept of Sec. I by giving up the idea of dedicated redundant subcarriers, thereby allowing to spread the redundant energy over all code word symbols instead. To this end, new cost functions may be defined that additionally take the receiver processing into account. Instead of purely focusing on the redundant energy, we define performance measures based on the sum of the error variances at the output of the data estimator. It will turn out that this approach significantly outperforms CP-OFDM and also the original systematic coded UW-OFDM presented in Sec. I.

*A. The Idea of Non-Systematic Coding in UW-OFDM*

With the introduction and optimization of the permutation matrix **P** the energy contribution of the redundant subcarrier symbols has been minimized as described in Sec. I. From the optimum choice of the permutation matrix **P** we learned that the redundant subcarrier symbols shall be distributed approximately equidistant over the code word $\tilde{\mathbf{c}}$, cf. Fig 2. This means that the redundant energy is not concentrated in bundles of subcarrier symbols, but it is spread out over the codeword. Nevertheless, the portions of the redundant energy are only concentrated on the dedicated redundant subcarrier symbol positions. However, from this equidistant distribution of the redundant energy the inventor guessed that it might make sense to distribute the redundancy over all subcarrier symbols. Then, however, one can no longer speak of dedicated redundant subcarriers, since every subcarrier will then carry an amount of redundant energy instead. The embodiments outlined below incorporate this idea into the UW-OFDM symbol generation process by replacing **G** as defined in (8) by a code generator matrix $\breve{\mathbf{G}}$ (of the same size as **G**) which spreads the redundancy over all code word symbols. The code described by $\breve{\mathbf{G}}$ can then be interpreted as a non-systematic code since the original data symbols $\tilde{\mathbf{d}}$ will not appear in the code word

$$\tilde{\mathbf{c}} = \breve{\mathbf{G}}\tilde{\mathbf{d}} \tag{24}$$

any longer. $\breve{\mathbf{G}}$ distributes portions of a single data symbol over all (or at least several) code word symbols, and it additionally adds redundancy. Consequently, and analogical to **G**, $\breve{\mathbf{G}}$ can be interpreted as a mixture of a precoder, cf. [6], and a channel coder. However, $\breve{\mathbf{G}}$ significantly differs from **G** in the specific way how data and redundancy are spread over the code word.

In the following we will formulate optimization criteria from which $\breve{\mathbf{G}}$ may be derived. Following the way we optimized the permutation matrix **P,** we could again think of a redundant energy minimization. However, since the redundant energy will now be smeared over all subcarrier symbols it is not clear how to enforce this. Therefore, the optimization examples outlined below no longer focus on the redundant energy reduction, but aim for optimization criteria that take the complete transceiver processing into account. Two examples are representatively described now.

*B. Transceiver Cost Function for the BLUE*

Clearly the linear data estimators in (20) and (22) can also be used for non-systematic coded UW-OFDM. We only have to substitute **G** by $\breve{\mathbf{G}}$. We first focus on the BLUE given by (20). A possible approach to optimize the overall transceiver performance is to choose the code generator matrix $\breve{\mathbf{G}}$ such that the sum over the error variances after the data estimation becomes minimum. With (21) this would lead to the cost function

$$J = \mathrm{tr}\{\mathbf{C}_{\tilde{e}\tilde{e}}\} = N\sigma_n^2 \mathrm{tr}\left\{(\breve{\mathbf{G}}^H\tilde{\mathbf{H}}^H\tilde{\mathbf{H}}\breve{\mathbf{G}})^{-1}\right\}. \tag{25}$$

If aiming for a code generator matrix design which shall be done only once during system design, the dependence of the cost function on the particular channel $\tilde{\mathbf{H}}$ is inappropriate, and one may look for an optimum $\breve{\mathbf{G}}$ for the case $\tilde{\mathbf{H}} = \mathbf{I}$, that is the AWGN channel case. *J* then reduces to

$$J = N\sigma_n^2 \mathrm{tr}\left\{(\breve{\mathbf{G}}^H\breve{\mathbf{G}})^{-1}\right\}. \tag{26}$$

In the simulation section it will be demonstrated that the finally derived non-systematic coded UW-OFDM systems not only perform superior in the AWGN channel case, but also and particularly in frequency selective channels. It will turn out that the solution to the formulated optimization problem is not unambiguous. As will be seen, this comes from the advantageous combination of the channel coding and precoding abilities of the optimized code generator matrices. But let us come back to the formulation of an appropriate optimization criterion and to *J* as given in (26): We could try to minimize *J* for a given $\sigma_n^2$, where the particular choice of $\sigma_n^2$ is clearly of no influence. However, different choices of $\breve{\mathbf{G}}$ lead to different mean OFDM symbol energies and consequently to different ratios $E_s/\sigma_n^2$, where $E_s$ denotes the mean energy of an individual QAM data symbol. Since it is not desirable to reach the goal of a small sum of error variances at the cost of a huge transmit energy, it is much more reasonable and fair to fix the ratio $c = E_s/\sigma_n^2$ during the optimization. To obtain an expression for $E_s$ we calculate the mean OFDM symbol energy $E_x$ (for the case of a zero UW) first:

$$E_{\mathbf{x}} = E[\mathbf{x}^H \mathbf{x}]$$
$$= E[(\mathbf{F}_N^{-1}\mathbf{B}\breve{\mathbf{G}}\tilde{\mathbf{d}})^H \mathbf{F}_N^{-1}\mathbf{B}\breve{\mathbf{G}}\tilde{\mathbf{d}}]$$
$$= \frac{1}{N} E[\tilde{\mathbf{d}}^H \breve{\mathbf{G}}^H \mathbf{B}^T \mathbf{F}_N \mathbf{F}_N^{-1}\mathbf{B}\breve{\mathbf{G}}\tilde{\mathbf{d}}]$$
$$= \frac{1}{N} E[\tilde{\mathbf{d}}^H \breve{\mathbf{G}}^H \breve{\mathbf{G}}\tilde{\mathbf{d}}] \tag{27}$$

With $\mathbf{a}^H\mathbf{b} = \mathrm{tr}\{\mathbf{b}\mathbf{a}^H\}$ we can further write

$$E_{\mathbf{x}} = \frac{1}{N} E[\mathrm{tr}\{\breve{\mathbf{G}}^H \breve{\mathbf{G}}\tilde{\mathbf{d}}\tilde{\mathbf{d}}^H\}]$$
$$= \frac{1}{N} \mathrm{tr}\{E[\breve{\mathbf{G}}^H \breve{\mathbf{G}}\tilde{\mathbf{d}}\tilde{\mathbf{d}}^H]\}$$
$$= \frac{\sigma_d^2}{N} \mathrm{tr}\{\breve{\mathbf{G}}^H \breve{\mathbf{G}}\}. \tag{28}$$

The mean QAM data symbol energy $E_s$ follows to $E_s = E_x/N_d$, With $c = E_s/\sigma_n^2$ we obtain

$$\sigma_n^2 = \frac{E_s}{c} = \frac{\sigma_d^2 \mathrm{tr}\{\breve{\mathbf{G}}^H \bar{\mathbf{G}}\}}{cNN_d}. \tag{29}$$

Inserting (29) into (26) finally yields the cost function

$$J_{\mathrm{BLUE}} = \frac{\sigma_d^2}{cN_d} \mathrm{tr}\left\{\breve{\mathbf{G}}^H \breve{\mathbf{G}}\right\} \mathrm{tr}\left\{(\breve{\mathbf{G}}^H \breve{\mathbf{G}})^{-1}\right\}. \tag{30}$$

The cost function $J_{\mathrm{BLUE}}$ measures the overall transceiver performance at a fixed ratio $E_s/\sigma_n^2$. However, the particular choice of the ratio $c = E_s/\sigma_n^2$ is obviously irrelevant for the searching of optimum code generator matrices.

An optimum code generator matrix $\breve{\mathbf{G}}$ shall consequently be found by minimizing $J_{\mathrm{BLUE}}$, but in addition, in order that the zero UW is generated in the time domain, $\breve{\mathbf{G}}$ has to be constrained to fulfill

$$\mathbf{F}_N^{-1}\mathbf{B}\breve{\mathbf{G}}\tilde{\mathbf{d}} = \begin{bmatrix} \mathbf{x}_d \\ \mathbf{0} \end{bmatrix} \tag{31}$$

for every possible data vector $\tilde{\mathbf{d}}$, or equivalently

$$\mathbf{F}_N^{-1}\mathbf{B}\breve{\mathbf{G}} = \begin{bmatrix} \ast \\ \mathbf{0} \end{bmatrix}. \tag{32}$$

Hence, every column vector of $\breve{\mathbf{G}}$ has to be orthogonal to the $N_u$ lowermost row vectors of $\mathbf{F}_N^{-1}\mathbf{B} \in \mathbb{C}^{N \times (N_d + N_r)}$. Note that $\mathbf{F}_N^{-1}\mathbf{B}$ is composed of those columns of $\mathbf{F}_N^{-1}$ that correspond to the non-zero entries of the OFDM frequency domain symbol $\tilde{\mathbf{x}}$.

Consequently, we have to solve a constrained optimization problem for $\bar{\mathbf{G}}$, which can finally be written as

$$\breve{\mathbf{G}} = \operatorname{argmin}\{J_{\mathrm{BLUE}}\} \quad \text{s.t.} \quad \mathbf{F}_N^{-1}\mathbf{B}\bar{\mathbf{G}} = \begin{bmatrix} * \\ \mathbf{0} \end{bmatrix}. \tag{33}$$

The solutions to the optimization problem will lead to code generator matrices **G** matched to the BLUE 'decoding' procedure.

*C. Transceiver Cost Function for the LMMSE Data Estimator*

In this subsection we assume that the LMMSE estimator will be used for data estimation. Again we are aiming for optimizing the overall system performance by minimizing the sum over the error variances after the data estimation. Using (23) with $\tilde{\mathbf{H}} = \mathbf{I}$ this leads to

$$J = N\sigma_n^2 \operatorname{tr}\left\{ \left(\breve{\mathbf{G}}^H \breve{\mathbf{G}} + \frac{N\sigma_n^2}{\sigma_d^2}\mathbf{I}\right)^{-1} \right\}. \tag{34}$$

Like in the considerations for the BLUE we fix $c = E_s/\sigma_n^2$, and we therefore insert (29) into (34) to obtain the cost function

$$J_{\mathrm{LMMSE}} = \frac{\sigma_d^2}{cN_d} \operatorname{tr}\{\breve{\mathbf{G}}^H \breve{\mathbf{G}}\} \operatorname{tr}\left\{ \left( \breve{\mathbf{G}}^H \breve{\mathbf{G}} + \frac{\operatorname{tr}\{\breve{\mathbf{G}}^H \breve{\mathbf{G}}\}}{cN_d}\mathbf{I}\right)^{-1} \right\}. \tag{35}$$

Alternatively, the cost function can also be written as

$$J_{\mathrm{LMMSE}} = \sigma_d^2 \operatorname{tr}\left\{ \left( \frac{cN_d}{\operatorname{tr}\{\breve{\mathbf{G}}^H \breve{\mathbf{G}}\}} \breve{\mathbf{G}}^H \breve{\mathbf{G}} + \mathbf{I}\right)^{-1} \right\}. \tag{36}$$

The constrained optimization problem to find $\breve{\mathbf{G}}$ can finally be written as

$$\breve{\mathbf{G}} = \operatorname{argmin}\{J_{\mathrm{LMMSE}}\} \quad \text{s.t.} \quad \mathbf{F}_N^{-1}\mathbf{B}\breve{\mathbf{G}} = \begin{bmatrix} * \\ \mathbf{0} \end{bmatrix}. \tag{37}$$

For sufficiently large $c$ we have $J_{\mathrm{LMMSE}} \approx J_{\mathrm{BLUE}}$, and the particular choice of $c$ is again irrelevant for the searching of optimum code generator matrices. However, this is not immediately apparent for small values of $c$. The solutions to the optimization problem will lead to code generator matrices $\breve{\mathbf{G}}$ matched to the LMMSE 'decoding' procedure.

**III. Solutions of the Optimization Problems**

In this section, first the optimization problems in (33) and (37) are solved numerically. The solutions are ambiguous, however all found code generator matrices share a number of common properties which are then discussed in detail. With the help of analytical considerations which are partly shifted to the appendices it is shown that all found code generator matrices not only correspond to local minima but to the global minimum of the associated cost function.

*A. Preparatory Steps and Numerical Solution with the Steepest Descent Algorithm*

In this section the steepest descent algorithm is used to numerically solve the optimization problems in (33) and (37). As a preparatory step the constrained optimization problems are transformed into unconstrained problems. For that and according to (8) we write **G** in the form

$$\breve{\mathbf{G}} = \mathbf{A}\mathbf{P}\begin{bmatrix} \mathbf{I} \\ \breve{\mathbf{T}} \end{bmatrix}, \qquad (38)$$

with a non-singular real matrix $\mathbf{A} \in \mathbb{R}^{(N_d+N_r)\times(N_d+N_r)}$, and with a fixed permutation matrix **P** as e.g. found by minimizing the cost function in (7). The constraint in (33) and (37) can now be rewritten as

$$\mathbf{F}_N^{-1}\mathbf{B}\mathbf{A}\mathbf{P}\begin{bmatrix} \mathbf{I} \\ \breve{\mathbf{T}} \end{bmatrix} = \begin{bmatrix} * \\ \mathbf{0} \end{bmatrix}. \qquad (39)$$

With the introduction of

$$\breve{\mathbf{M}} = \mathbf{F}_N^{-1}\mathbf{B}\mathbf{A}\mathbf{P} = \begin{bmatrix} \breve{\mathbf{M}}_{11} & \breve{\mathbf{M}}_{12} \\ \breve{\mathbf{M}}_{21} & \breve{\mathbf{M}}_{22} \end{bmatrix}, \qquad (40)$$

the constraint in (39) can now simply be fulfilled by choosing $\breve{\mathbf{T}}$ as

$$\breve{\mathbf{T}} = -(\breve{\mathbf{M}}_{22})^{-1}\breve{\mathbf{M}}_{21}. \qquad (41)$$

That means that for a given non-singular real matrix **A**, the matrices $\breve{\mathbf{T}}$ and $\breve{\mathbf{G}}$ can unambiguously be calculated by (41) and (38), respectively, such that the constraint in (33) and (37) is automatically fulfilled. We can now consider the cost functions $J_{\text{BLUE}}$ and $J_{\text{LMMSE}}$ as functions of the real matrix **A**, where $\breve{\mathbf{T}}$ and $\breve{\mathbf{G}}$ have to be determined by (41) and (38), respectively. The steepest descent algorithm can then be applied to the unconstrained optimization problems

$$\mathbf{A}_{\text{opt}} = \operatorname{argmin}\left\{ J_{\text{BLUE,LMMSE}} \right\} \qquad (42)$$

in a straight forward manner. In (42) either $J_{\text{BLUE}}$ or $J_{\text{LMMSE}}$ is minimized. By following this approach the steepest descent algorithm automatically only searches within a subset of matrices $\breve{\mathbf{G}}$ that fulfill the constraint in (33) and (37), or in other words that produce a zero UW in the OFDM time domain symbols.

For the steepest descent algorithm the gradients of the cost functions $J_{\text{BLUE}}$ and $J_{\text{LMMSE}}$ with respect to the real matrix **A** are required. The partial derivations $\partial J/\partial[A]_{ij}$ may be approximated by

$$\frac{\partial J}{\partial[A]_{ij}} = \frac{J([A]_{ij}+\varepsilon) - J([A]_{ij}-\varepsilon)}{2\varepsilon}, \qquad (43)$$

with a very small $\varepsilon$. For $J$ we inserted $J_{\text{BLUE}}$ or $J_{\text{LMMSE}}$, respectively. Two different approaches for the initialization of the steepest descent algorithm may be used:

*1) Initialization with the Code Generator Matrix* **G** : In the first approach, the initialization is chosen

$$\mathbf{A}^{(0)} = \mathbf{I} \qquad\qquad (44)$$

which implies $\check{\mathbf{T}}^{(0)} = \mathbf{T}$ and

$$\check{\mathbf{G}}^{(0)} = \mathbf{P}\begin{bmatrix} \mathbf{I} & \mathbf{T}^{T} \end{bmatrix}^{T} = \mathbf{G}. \qquad\qquad (45)$$

The iterative optimization process consequently starts with the code generator matrix **G** of the original systematic coded UW-OFDM concept described in Sec. I, which can definitely be assumed to be a good initial guess. We denote the resulting optimum code generator matrix (found after convergence of the algorithm) with $\check{\mathbf{G}}'$.

*2) Random Initialization:* In the second approach, each element of $\mathbf{A}^{(0)}$ is chosen as a realization of a Gaussian random variable with mean zero and variance one:

$$[\mathbf{A}^{(0)}]_{ij} \sim \mathcal{N}(0,1) \qquad\qquad (46)$$

We denote the resulting code generator matrix with $\check{\mathbf{G}}''$.

For both cost functions $J_{\text{BLUE}}$ and $J_{\text{LMMSE}}$ the following holds true: By using the initialization as in (44) the steepest descent algorithm converges at least one order of magnitude faster compared to the case when (46) is used. For the random initialization approach the resulting code generator matrix generally varies from trial to trial.

*B, General Properties of Optimum Code Generator Matrices for the BLUE*

Interestingly enough all found local minima for the BLUE based numerical optimization feature the same value of the cost function $J_{\text{BLUE,min}}$, independently of the choice of the initialization $\mathbf{A}^{(0)}$. Another highly interesting finding is, that all resulting code generator matrices (again independently of $\mathbf{A}^{(0)}$) feature the property

$$\check{\mathbf{G}}^{H}\check{\mathbf{G}} = \alpha\mathbf{I} \qquad\qquad (47)$$

with some constant $\alpha$ (which may vary dependent on the results of the optimization process). This property has a number of important implications. First, inserting (47) into the cost function (30) leads to

$$J_{\text{BLUE,min}} = \frac{\sigma_d^2}{cN_d}(N_d\alpha)(N_d\alpha^{-1}) = \frac{\sigma_d^2 N_d}{c}, \qquad\qquad (48)$$

which is in agreement with the numerically found local minima. One can conclude that every $\check{\mathbf{G}}$ fulfilling

$$\check{\mathbf{G}}^{H}\check{\mathbf{G}} = \alpha\mathbf{I} \quad \text{and} \quad \mathbf{F}_{N}^{-1}\mathbf{B}\check{\mathbf{G}} = \begin{bmatrix} * \\ \mathbf{0} \end{bmatrix} \qquad\qquad (49)$$

for any value of $\alpha$ will also result in the same value $J_{\text{BLUE,min}}$ of the cost function, and will produce a zero UW in time domain. Second, if a code generator matrix satisfying (49) is applied, then the error covariance matrix after the data estimation in the AWGN channel is given by

$$\mathbf{C}_{\breve{e}\breve{e},\mathrm{BLUE}} = \frac{\sigma_d^2}{c}\mathbf{I}. \tag{50}$$

This simply follows from inserting (47) and (29) into (21). As an important consequence one can conclude that the noise at the output of the BLUE is uncorrelated under AWGN conditions. This is clearly in contrast to systematic coded UW-OFDM, where $\mathbf{C}_{\overline{ec}}$ is non-diagonal also in the AWGN channel case. And third, (47) implies that all singular values of $\breve{\mathbf{G}}$ are identical. To show this, consider a singular value decomposition (SVD) of $\breve{\mathbf{G}}$ as

$$\breve{\mathbf{G}} = \mathbf{U}\boldsymbol{\Sigma}\mathbf{V}^H, \tag{51}$$

with unitary matrices **U** and **V**, and with the matrix $\boldsymbol{\Sigma} = \begin{bmatrix} \mathbf{D} & \mathbf{0} \end{bmatrix}^T$, where **D** is a real diagonal matrix having the singular values $s_1, s_2,...,s_{N_d}$ of $\breve{\mathbf{G}}$ at its main diagonal. With (47) we therefore have

$$\alpha\mathbf{I} = \breve{\mathbf{G}}^H\breve{\mathbf{G}} = \mathbf{V}\boldsymbol{\Sigma}^H\mathbf{U}^H\mathbf{U}\boldsymbol{\Sigma}\mathbf{V}^H = \mathbf{V}\mathbf{D}^2\mathbf{V}^H$$

$$\Leftrightarrow \alpha\mathbf{I} = \mathbf{D}^2 = \mathrm{diag}\left\{ s_1^2, s_2^2, ..., s_{N_d}^2 \right\}. \tag{52}$$

From (52) it follows that $\breve{\mathbf{G}}^H\breve{\mathbf{G}} = \alpha\mathbf{I}$ implies $\alpha = s_1^2 = s_2^2 = \cdots s_{N_d}^2 := s^2$. The property in (47) can therefore also be written as

$$\breve{\mathbf{G}}^H\breve{\mathbf{G}} = s^2\mathbf{I}. \tag{53}$$

The argumentation can also be done the other way round: If all singular values of $\breve{\mathbf{G}}$ are identical then we have $\breve{\mathbf{G}}^H\breve{\mathbf{G}} = \alpha\mathbf{I}$ with $\alpha = s^2$.

An open question is still whether the value of the cost function $J_{\mathrm{BLUE,min}}$ as in (48) corresponding to the numerically found local minima depicts the global minimum of the constrained optimization problem in (33). To answer this question, at first one should merely concentrate on the cost function $J_{\mathrm{BLUE}}$, disregarding the constraint in (33) for a moment: Let $\mathbf{s} = [s_1\ s_2\ \cdots\ s_{N_d}]^T$ be the vector of singular values of $\breve{\mathbf{G}}$. In Appendix A it is analytically shown that $\partial J_{\mathrm{BLUE}}/\partial\mathbf{s} = 0$ if and only if all singular values of $\breve{\mathbf{G}}$ are identical. Consequently, every possible candidate $\breve{\mathbf{G}}$ for a local minimum satisfies $\breve{\mathbf{G}}^H\breve{\mathbf{G}} = s^2\mathbf{I}$ (cf. (52) and its implications). Inserting $\breve{\mathbf{G}}^H\breve{\mathbf{G}} = s^2\mathbf{I}$ into the cost function (30) leads to the same expression as in (48), and hence, every $\breve{\mathbf{G}}$ fulfilling $\breve{\mathbf{G}}^H\breve{\mathbf{G}} = s^2\mathbf{I}$ results in the same (and minimum) value $J_{\mathrm{BLUE,min}} = \sigma_d^2 N_d/c$ which therefore constitutes the global minimum of the cost function.

Coming back to the constrained problem in (33), it follows from the numerical solutions that matrices exist, that firstly satisfy $\breve{\mathbf{G}}^H\breve{\mathbf{G}} = s^2\mathbf{I}$ and therefore result in the global minimum of the cost function $J_{\mathrm{BLUE}}$, and that secondly fulfill the constraint $\mathbf{F}_N^{-1}\mathbf{B}\breve{\mathbf{G}} = \begin{bmatrix} * \\ \mathbf{0} \end{bmatrix}$. With these considerations, the following important proposition can be formulated:

**Properties of optimum code generator matrices:** *A code generator matrix* $\breve{\mathbf{G}}$ *is optimum, i.e. leads to a global minimum of the constrained optimization problem in (33), if and only if* $\breve{\mathbf{G}}$ *satisfies*

$$\breve{\mathbf{G}}^H \breve{\mathbf{G}} = s^2 \mathbf{I} \quad and \tag{54}$$

$$\mathbf{F}_N^{-1} \mathbf{B} \breve{\mathbf{G}} = \begin{bmatrix} * \\ \mathbf{0} \end{bmatrix}, \tag{55}$$

*where* $s := s_1 = s_2 = \dots = s_{N_d}$ *are the (all identical) singular values of* $\breve{\mathbf{G}}$. *The global minimum of the cost function is given by (48), and the error covariance matrix after data estimation (in the AWGN channel) is the scaled identity matrix as given in (50).*

Note that because of (54) the columns of any optimum code generator matrix $\overline{\mathbf{G}}$ form an orthogonal basis of an $N_d$-dimensional subspace of $\mathbb{C}^{(N_d+N_r)\times 1}$. Furthermore, as already discussed above, (55) implies that every column vector of an optimum $\breve{\mathbf{G}}$ is orthogonal to the $N_u$ lowermost row vectors of $\mathbf{F}_N^{-1} \mathbf{B}$.

*C. General Properties of Optimum Code Generator Matrices for the LMMSE Estimator*

In Appendix B it is analytically shown that $\partial J_{\mathrm{LMMSE}}/\partial \mathbf{s} = \mathbf{0}$ if and only if all singular values of $\breve{\mathbf{G}}$ are identical. All other findings from Sec. III also hold for the LMMSE estimator based transceiver optimization, except the particular expressions for $J_{\mathrm{LMMSE,min}}$ and $\mathbf{C}_{\overline{ee},\mathrm{LMMSE}}$ differ slightly. With (47), (23) and (36) it immediately follows that

$$J_{\mathrm{LMMSE,min}} = \frac{\sigma_d^2 N_d}{c+1}, \tag{56}$$

$$\mathbf{C}_{\tilde{e}\tilde{e},\mathrm{LMMSE}} = \frac{\sigma_d^2}{c+1} \mathbf{I}. \tag{57}$$

As a consequence of the above findings one may learn that a code generator matrix which is optimum for the BLUE based 'decoding' procedure is automatically also optimum for the LMMSE based data estimation (and vice versa).

*D. Normalized Optimum Code Generator Matrices*

From (48) and (56) it follows that the particular value of $\alpha = s^2$ does not play any important role. In our simulations, cf. Sec. V, we therefore normalized all found code generator matrices such that $\alpha = s^2 = 1$ or $\breve{\mathbf{G}}^H \breve{\mathbf{G}} = \mathbf{I}$. The columns of any normalized optimum code generator matrix $\breve{\mathbf{G}}$ form an orthonormal basis of an $N_d$-dimensional subspace of $\mathbb{C}^{(N_d+N_r)\times 1}$. As another consequence of s = 1 the operation $\tilde{\mathbf{c}} = \breve{\mathbf{G}}\tilde{\mathbf{d}}$ becomes energy-invariant and we have $E_{\tilde{\mathbf{c}}} = E_{\tilde{\mathbf{d}}} = N_d \sigma_d^2$, and the mean energy of an OFDM time domain symbol (for the zero UW case) follows to $E_{\mathbf{x}} = N_d \sigma_d^2 / N$, cf. (28).

*E. Comparison of Generator Matrices obtained from different Initialization Strategies*

In the following, some further interesting properties of two particular numerically found solutions are discussed.

Exemplarily, the following portion concentrates on $\breve{\mathbf{G}}'$ and on one particular solution for $\breve{\mathbf{G}}''$ (and the corresponding matrices $\mathbf{A}_{\text{opt}}'$ and $\mathbf{A}_{\text{opt}}''$) found by applying the LMMSE estimator based optimization with $c = 1$ for the initializations as described in (44) and (46), respectively.

The matrix $\mathbf{A}_{\text{opt}}'$ features the symmetry property

$$\mathbf{A}_{\text{opt}}' = [\mathbf{a}_0' \cdots \mathbf{a}_{N_a/2-1}' \quad \text{flip}\{\mathbf{a}_{N_a/2-1}'\} \cdots \text{flip}\{\mathbf{a}_0'\}], \qquad (58)$$

where $N_a = N_d + N_r$ and the $\mathbf{a}_i'$ with $i = 0,1,...,N_a/2-1$ are the first $N_a/2$ columns of $\mathbf{A}_{\text{opt}}'$ The corresponding code generator matrix $\breve{\mathbf{G}}'$ shows the same symmetry property as $\mathbf{G}$ in Section 2, namely

$$\breve{\mathbf{G}}' = [\breve{\mathbf{g}}_0' \cdots \breve{\mathbf{g}}_{N_d/2-1}' \quad \text{flip}\{(\breve{\mathbf{g}}_{N_d/2-1}')^*\} \cdots \text{flip}\{(\breve{\mathbf{g}}_0')^*\}] \qquad (59)$$

Here the $\breve{\mathbf{g}}_{i'}$ with $i = 0, 1,..., N_d/2-1$ are the first $N_d/2$ columns of $\breve{\mathbf{G}}'$. These symmetry properties do not hold for $\mathbf{A}_{\text{opt}}''$ and $\breve{\mathbf{G}}''$, respectively. It appears that the matrices $\mathbf{A}_{\text{opt}}'$ and $\mathbf{A}_{\text{opt}}''$ show a completely different construction. $\mathbf{A}_{\text{opt}}'$ approximately features a band matrix structure, where all dominant entries are positioned on the main diagonal and the first few diagonals directly above and below the main diagonal. The remaining elements are close to zero. In contrast $\mathbf{A}_{\text{opt}}''$ is a full matrix. This results in completely different (pre)coding properties of $\breve{\mathbf{G}}'$ and $\breve{\mathbf{G}}''$. $\breve{\mathbf{G}}''$ can be regarded as the natural perfecting of $\mathbf{G}$ and is constructed such that the energy of one data symbol is mainly (however, not exclusively) spread locally. In contrast $\breve{\mathbf{G}}''$ spreads the energy of each data symbol approximately uniformly over the codeword $\tilde{\mathbf{c}}$. While $\breve{\mathbf{G}}'$ and $\breve{\mathbf{g}}_{i'}$ perform identically in an AWGN environment the discussed differences lead to a quite different behavior of $\breve{\mathbf{G}}'$ and $\breve{\mathbf{G}}''$ in frequency selective environments. These differences and the consequences in the simulation section shall be exemplified as follows:

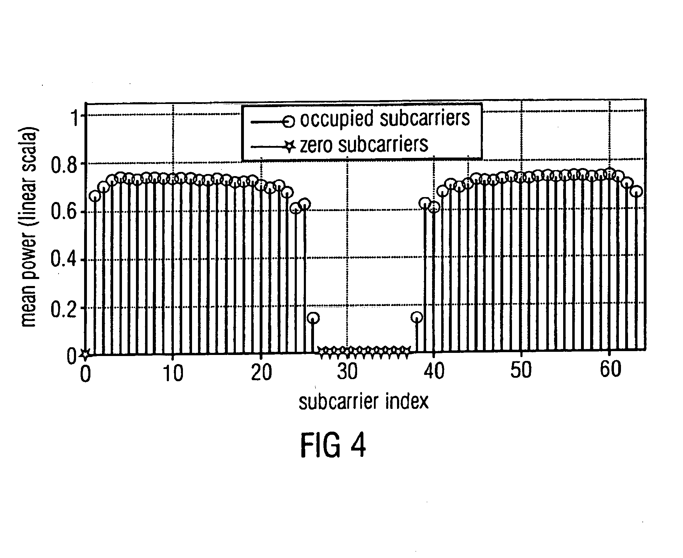

*Example 2*: We apply the system parameters as in Example 1 and investigate the mean power levels for all individual subcarriers for the case the non-systematic code generator matrix $\breve{\mathbf{G}}'$ is applied. The mean power values for the codeword symbols correspond to the diagonal elements of the covariance matrix $\mathbf{C}_{\tilde{c}\tilde{c}} = \sigma_d^2 \breve{\mathbf{G}}'(\breve{\mathbf{G}}')^H$. Fig. 4 shows the power distribution over all subcarrier symbols (additionally also including the zero subcarrier symbols) again for the case the UW is the zero word $\mathbf{x}_u = \mathbf{0}$ and for $\sigma_d^2 = 1$.

We can clearly identify that our chosen optimality criterion also implies a significant reduction of the power levels of the former redundant subcarriers compared to the original UW-OFDM approach, cf. Fig. 2. Furthermore, it can be seen that the redundant energy is now smeared over all subcarriers, consequently we can no longer speak of data or redundant subcarriers. The power levels are quite similar for all symbols, the only exceptions are the two subcarrier symbols at the band edges. Due to the normalization of $\breve{\mathbf{G}}'$ such that $(\breve{\mathbf{G}}')^H \breve{\mathbf{G}}' = \mathbf{I}$ we have

$$\text{tr}\{\mathbf{C}_{\tilde{c}\tilde{c}}\} = \sigma_d^2 \text{tr}\{\breve{\mathbf{G}}'(\breve{\mathbf{G}}')^H\} = \sigma_d^2 \text{tr}\{(\breve{\mathbf{G}}')^H \breve{\mathbf{G}}'\} = N_d \sigma_d^2.$$ In Fig. 4 the sum over all mean power levels is therefore 36.

*F. Embodiment for an OFDM Transmitter*

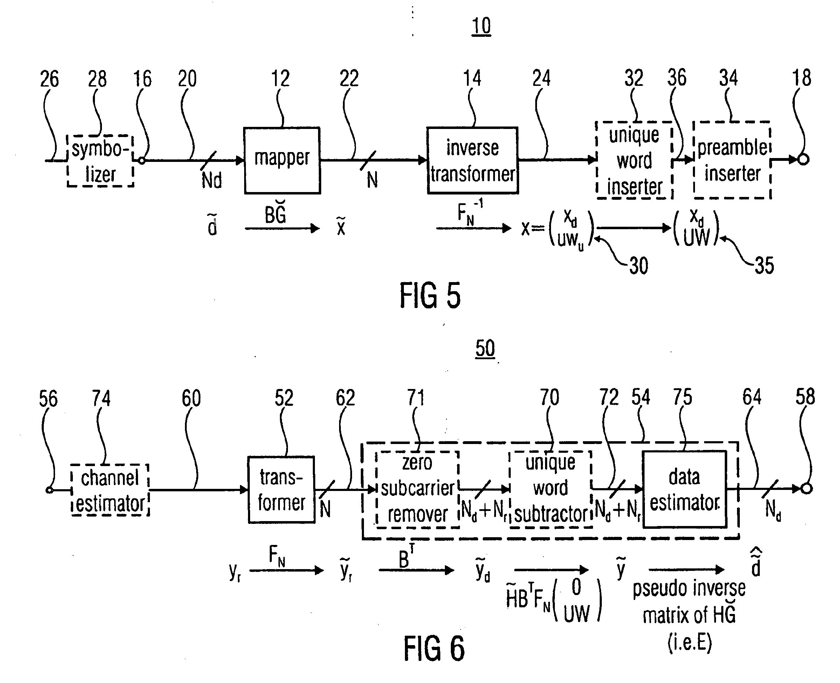

Fig. 5 shows an OFDM transmitter which may be obtained by applying the above-outlined thoughts. The OFDM transmitter of Fig. 5 is generally indicated with reference sign 10 and comprises a mapper 12 and an inverse transformer 14. Mapper 12 and inverse transformer 14 are serially connected between an input 16 of OFDM transmitter 10 and an output 18 thereof. At input 16 the data symbol to be transmitted enters OFDM transmitter 10 and mapper 12, respectively. The output 18 is for outputting a final transmission signal including the OFDM time domain symbols and may be connected, for example, to a transmission stage for wireless transmission including, for example, a modulator, an analog/digital converter, an up-mixer, one or more amplifiers and/or one or more antennas.

The mapper 12 is configured to map $N_d$ data symbols 20 onto $N$ frequency domain samples with $N > N_d$. The inverse transformer 14 is configured to transfer the $N$ frequency domain samples 22 from frequency domain to time domain to obtain an OFDM time domain symbol 24, which is to be output at output 18 within the transmission signal.

The mapper 12 is configured to use a non-systematic mapping function, namely the generator matrix $\breve{\mathbf{G}}$, to map the $N_d$ data symbols 20 onto $N_d + N_r \leq N$ of the $N$ frequency domain samples 22 such that the OFDM time domain symbol 24 comprises a predetermined portion of a predetermined value, which portion is independent from the $N_d$ data symbols 20.

To be more precise, the symbols 20 entering input 16 may have been obtained from a bit sequence 26 by way of a symbolizer 28 using a predetermined modulation alphabet or constellation mapping such as QAM or the like. The bit sequence 26 may have been obtained from a payload data sequence by subjecting the latter to interleaving, forward error correction or outer encoding codes, puncturing or the like. The symbolizer 28 may be internal or external to the OFDM transmitter 10. Fig. 5 illustrates the latter case.

Accordingly, the $N_d$ data symbols 20 may be represented by $N_d$ complex values. Consecutively, mapper 12 maps $N_d$ data symbols 20 onto consecutive groups of $N$ frequency domains samples 22 with each such group of $N$ frequency domain samples resulting in a respective OFDM time domain symbol 24.

As becomes clear from the above discussion, mapper 12 applies a non-systematic redundancy code onto the $N_d$ data symbols 20 in order to obtain $N_d + N_r$ of the $N$ frequency domain samples 22 with the ratio between $N_d + N_r$ on the one hand and $N_r$ representing the amount of redundancy inserted by mapper 12. As noted above, the generator matrix $\breve{\mathbf{G}}$ may be classified as a non-systematic RS generator matrix over the field of complex numbers.

The above mentioned zero subcarrier insertion matrix $\mathbf{B}$ may or may not be applied by mapper 12. That is, the number $N$ of frequency domain samples 22 may be equal to the redundancy-expanded number $N_d + N_r$ frequency domain samples resulting from the application of the non-systematic mapping function $\breve{\mathbf{G}}$ in which case matrix $\mathbf{B}$ in the above sections would be a unity matrix of size $N_d + N_r$ or $\mathbf{B}$ may be applied with $\mathbf{B}$ being a $N \times (N_d + N_r)$ matrix resulting from a $(N_d + N_r) \times (N_d + N_r)$ unity matrix by inserting $N - N_d - N_r$ zero rows at the positions of the zero subcarriers.

At the bottom of the block diagram of Fig. 5, the functionality of the mapper 12 is again illustrated by use of the notation used in the previous sections: mapper 12 maps the $N_d$ data symbols represented by vector $\tilde{\mathbf{d}}$ using $\breve{\mathbf{G}}$ or - if zero subcarriers are to be introduced a concatenation of $\breve{\mathbf{G}}$ and $\mathbf{B}$ - onto the $N$-vector $\tilde{\mathbf{x}}$ of frequency domain samples. The inverse transformer 14 performs an inverse transform such as an IDFT representable by mapping function $\mathbf{F}_N^{-1}$, onto $\tilde{\mathbf{x}}$ resulting in the OFDM time domain symbol 24 represented here as vector $\mathbf{x}$. Merely for illustration purposes, the OFDM time domain symbol 24 is illustrated as having the predetermined portion $uw_u$, i.e. the unique word, as a contiguous portion at the end of the OFDM time domain symbol 24 and is of length $N_u$. However, the unique word may be positioned elsewhere, such as at the beginning, i.e. as a prefix instead of a suffix, or may be even interspersed within the OFDM time domain symbol 24. With regard to the previous sections, it is noted that mapper 12 is not restricted to cases where the unique word or predetermined portion continuously comprises zero over its full length. Rather, the predetermined value of the predetermined portion or unique word $uw_u$ may vary among the time domain samples of the OFDM time domain symbol 24 covered by the unique word 30.

However, as become clear from the above embodiments, mapper 12 may be configured such that the predetermined value of predetermined portion 30 is zero. Further, as shown in Fig. 5, OFDM transmitter 10 may optionally comprise a unique word inserter 32 to insert a unique word UW at the predetermined portion 30 to obtain an OFDM transmit symbol. That is, $uw_u$ may be zero and the unique word inserter 32, if present, may replace this zero portion 30 by a unique word UW selected, for example, in accordance with certain criteria, such as criteria adapted to the transmission channel or the like. The insertion may comprise an addition of the UW to the predetermined portion 30 which, in case of $uw_u$ being zero, results in UW.

Optionally, the OFDM transmitter 10 may further comprise a preamble inserter 34 configured to compose the transmission signal to be output at output 18 from a preamble intended for channel estimation at the reception side, and the OFDM time domain symbol 24 or OFDM transmit symbol 36, respectively. In other words, the preamble inserter 34 accompanies, in form of a prefix or suffix, the OFDM time domain symbol 24 - optionally having the unique word UW inserted by unique word inserter 32 - with a preamble enabling the OFDM receiver at the reception side to estimate the transmission channel, represented by some transmission channel matrix $\mathbf{H_c}$.

As already described above, the mapper 12 may be configured such that the non-systematic mapping function is a $(N_d + N_r) \times N_d$ matrix $\breve{\mathbf{G}}$ obeying $\breve{\mathbf{G}} = \mathbf{AP}\begin{bmatrix}\mathbf{I} \\ \hline \breve{\mathbf{T}}\end{bmatrix}$ with $\breve{\mathbf{T}}$ being a $N_r \times N_d$ matrix constructed according to

$\breve{\mathbf{T}} = -(\breve{\mathbf{M}}_{22})^{-1}\breve{\mathbf{M}}_{21}$ from a $N_r$ x $N_r$ submatrix $\breve{\mathbf{M}}_{22}$ and a $N_r$ x $N_d$ submatrix $\breve{\mathbf{M}}_{21}$ of

$$\breve{\mathbf{M}} = \mathbf{F}_N^{-1}\mathbf{BAP} = \begin{bmatrix} \breve{\mathbf{M}}_{11} & \breve{\mathbf{M}}_{12} \\ \breve{\mathbf{M}}_{21} & \breve{\mathbf{M}}_{22} \end{bmatrix}$$, where $\mathbf{F}_N$ is a length-$N$-DFT matrix, $\mathbf{B}$ is a $N$ x $(N_d + N_r)$ matrix resulting from a

$(N_d + N_r)$ x $(N_d + N_r)$ unity matrix by inserting $N - N_d - N_r$ zero rows wherein $\mathbf{P}$ is a $(N_d + N_r)$ x $(N_d + N_r)$ permutation

matrix and $\mathbf{A}$ is a $(N_d + N_r)$ x $(N_d + N_r)$ non-singular matrix so that $\mathbf{F}_N^{-1}\mathbf{BAP}\begin{bmatrix} \mathbf{I} \\ \breve{\mathbf{T}} \end{bmatrix} = \begin{bmatrix} * \\ \mathbf{0} \end{bmatrix}$. In this regard, please note

that $\mathbf{A}$ may also be a complex-valued matrix. In particular, the non-systematic mapping function may be an $(N_d + N_r)$ x

$N_d$ matrix $\breve{\mathbf{G}}$ satisfying $\breve{\mathbf{G}}^H\breve{\mathbf{G}} = s^2\mathbf{I}$ and $\mathbf{F}_N^{-1}\mathbf{B}\breve{\mathbf{G}} = \begin{bmatrix} * \\ \mathbf{0} \end{bmatrix}$, wherein $s$ is a common singular value of $\bar{\mathbf{G}}$, $\mathbf{F}_N$ is a length-$N$-DFT matrix and $\mathbf{B}$ is a $N$ x $(N_d + N_r)$ matrix resulting from a $(N_d + N_r)$ x $(N_d + N_r)$ unity matrix by inserting $N - N_d - N_r$ zero rows. Again, if $N = N_d + N_r$ the matrix $\mathbf{B}$ reduces to a unity matrix of size $(N_d + N_r)$ x $(N_d + N_r)$.

It should be mentioned with respect to Fig. 5 that the mapper 12 is not restricted to the above mentioned possibilities for selecting $\mathbf{B}$. The matrix $\mathbf{B}$ may not only be for introducing zero subcarriers. Rather, $\mathbf{B}$ may also be used for inserting pilot symbols into the OFDM symbol. In this case, the matrix $\breve{\mathbf{G}}$ may have to be selected differently, but in principle the structure of the OFDM time domain symbol 24 may achieve to be the same.

Finally, it is noted that all of the above outlined possibilities for choosing, and characteristics of, $\breve{\mathbf{G}}$ naturally also apply to the embodiment of Fig. 5.

*G. OFDMReceiver*

Fig. 6 shows an embodiment for an OFDM receiver in accordance with an embodiment of the present invention. The OFDM receiver is generally indicated with reference sign 50. The OFDM receiver 50 comprises a transformer 52 and a data estimator 54. They are connected in series between an input 56 of OFDM receiver 50 and an output 58 thereof. The input 56 receives a receive signal including OFDM symbols. The receive signal corresponds to the transmit signal as output at output 18 of OFDM transmitter 10 of Fig. 5 including deviations thereof as resulting from the transmission channel represented by the transmission channel matrix $\mathbf{H_c}$, in the following. In particular, the OFDM receiver 50 may be connected via input 56 to a reception stage including, for example, one or several antennas, one or more amplifiers, a downmixer, a demodulator, such as for example an I/Q demodulator, and/or an analog/digital converter. However, the reception stage may also be configured differently and the same applies to the above-mentioned transmission stage following the output 18 of OFDM transmitter 10.

In any case, the transformer 52 is configured to transfer an OFDM time domain symbol 60 out of the receive signal received at input 56, from time domain to frequency domain to obtain N frequency domain samples 62. The data estimator 54, in turn, is configured to determine an estimate for $N_d$ data symbols 64 from the $N$ frequency domain samples 62 with $N > N_d$ assuming that the $N_d$ data symbols have been mapped onto the $N$ frequency domain samples at the transmission side using a non-systematic mapping function, i.e. $\breve{\mathbf{G}}$, , such that the OFDM time domain symbol 36 comprises a predetermined portion 35 of a predetermined value independent from the $N_d$ data symbols.

As became clear from the above embodiments, the data estimator 54 may be configured to perform the determination assuming that the $N_d$ data symbols 64 have been mapped onto the $N$ frequency domain samples 62 using the non-systematic mapping function such that the OFDM time domain symbol 36 as sent at transmission side, is composed of a first portion $\mathbf{x_d}$ which depends on the $N_d$ data symbols, the estimate of which is to be determined, and a second portion uw$_u$ or 35, the predetermined value of which is independent from the $N_d$ data symbols. The actually received signal at input 56, however, does very likely not show the actually sent characteristic in time domain. In particular, the OFDM time domain symbol as sent may have had a zero portion 30, which, in turn, may have been overwritten by the unique word UW, respectively. The transmission channel $\tilde{\mathbf{H}}$ very likely modifies the OFDM time domain symbol actually sent to an extent so that the UW is no longer visible.

Accordingly, similar to the above description of Fig. 5, the OFDM receiver 50 may comprise a unique word subtractor 70, a zero subcarrier remover 71 and/or a channel estimator 74 as optional elements. The zero subcarrier remover 71 and the unique word subtractor 70 and may be part of the data estimator 54, along with a data estimation stage 75, all of which are connected in series to each other between transformer 52 and output 58.

The zero subcarrier remover 71 may be configured to remove $N - N_d - N_r$ zero subcarriers by applying $\mathbf{B}^T$ so

that the data estimator 54 handles frequency domain samples other than the $N_d + N_r$ frequency domain samples as zero subcarriers. The result is, in the notation used above, $\tilde{\mathbf{y}}_d$.

The unique word subtractor 70 may be configured to subtract a spectrum of the known unique word UW from the N frequency domain samples 62 as obtained from the receive signal 60 at input 56, thereby obtaining a corrected version 72 of the N frequency domain samples for being subjected to the data estimation in data estimator 54. The spectrum subtracted may be formed according to the transmission channel as estimated by the channel estimator. In other words, in order to remove the contribution of a potentially inserted unique word UW, the OFDM receiver 50 may comprise the unique word subtractor 70 which, in turn, subtracts - in frequency domain - from the incoming OFDM receive symbol - or at least from the non-zero subcarriers - $\widetilde{\mathbf{H}}\mathbf{B}^T\mathbf{F}_N\begin{pmatrix} 0 \\ \mathrm{UW} \end{pmatrix}$, the spectrum of the unique word UW,

i.e. $\mathbf{F}_N\begin{pmatrix} 0 \\ \mathrm{UW} \end{pmatrix}$, as influenced by the transmission channel $\tilde{\mathbf{H}}$ - at the non-zero subcarriers as defined by $\mathbf{B}^T$.

The channel estimator 74 may be configured to estimate the transmission channel represented, for example, by $\tilde{\mathbf{H}}$ based on a preamble comprised, along with the OFDM symbol 60 and receive symbol 72, respectively, by the receive signal received at input 56. As became clear from the above discussion, the channel estimation may concentrate on the frequency portion covering the non-zero subcarriers. The transmission channel estimate may be used by the optional unique word subtractor 70 as described above. Further, the data estimation stage 75 may involve the transmission channel estimate in the data estimation procedure further described below. Alternatively, the data estimator 54 may have a channel equalizer which applies the inverse of $\tilde{\mathbf{H}}$ prior to the data estimation in stage 75.

Similar to the above discussion of Fig. 5, Fig. 6 also explains the functionality of the transformer 52 and data estimator 54 by use of the variables having been used in the previous sections. For example, the transformer 52 may, as shown in Fig. 6, be configured to perform a DFT represented by matrix $\mathbf{F}_N$ onto the OFDM time domain symbol 60 so as to obtain the OFDM symbol in the frequency domain, namely represented by the $N$ frequency domain samples 62 represented by vector $\tilde{\mathbf{y}}_r$.

Zero subcarriers, if present, are then removed in the remover 71 by applying $\mathbf{B}^T$ to $\tilde{\mathbf{y}}_r$ so as to obtain $\tilde{\mathbf{y}}_d$.

If a unique word UW has been introduced at the transmission side, the non-zero-subcarrier frequency domain

samples $\tilde{\mathbf{y}}_d$ are corrected by the influence of the unique word UW by subtracting $\widetilde{\mathbf{H}}\mathbf{B}^T\mathbf{F}_N\begin{pmatrix} 0 \\ \mathrm{UW} \end{pmatrix}$, to obtain $\tilde{\mathbf{y}}$.

The data estimation stage 75 of data estimator 54 is now for determining an estimate $\tilde{\mathbf{d}}$ for the $N_d$ data symbols 64 from these $N_d + N_r$ frequency domain samples $\tilde{\mathbf{y}}$. In principle, data estimation stage 75 is free to be implemented in a variety of manners. Generally speaking, data estimation stage 75 seeks to select one set (or - to be more precise - a vector) of possible symbol alphabet values for the $N_d$ data symbols as the estimate for the $N_d$ data symbols 64. It should be recalled that the data symbols 64 are of a predetermined symbol alphabet such as QAM or the like. Accordingly, the $N_d$ data symbols 64 corresponding to the current OFDM time domain symbol 60 and the derived $N_d + N_r$ frequency domain samples $\tilde{\mathbf{y}}$, respectively, are restricted to such possible sets of possible symbol alphabet values. Each of these possible symbol alphabet value sets $\tilde{\mathbf{d}}_{possible}$, in turn, corresponds to a certain frequency domain sample $(N_d + N_r)$-vector

in the frequency domain, i.e. one of $\{ \breve{\mathbf{G}}\,\tilde{\mathbf{d}}_{possible} \}$. However, the frequency domain samples in $\tilde{\mathbf{y}}$ may, for whatever reason, not correspond to any of these points. Naturally, noise leads to such an estimation. Even when considering the

channel estimation $\tilde{\mathbf{H}}$ so that each $\tilde{\mathbf{d}}_{possible}$ corresponds to one of $\{ \widetilde{\mathbf{H}}\,\breve{\mathbf{G}}\,\tilde{\mathbf{d}}_{possible} \}$ may leave a deviation between

the actually received $\tilde{\mathbf{y}}$ and any of the possible points $\{ \widetilde{\mathbf{H}}\,\breve{\mathbf{G}}\,\tilde{\mathbf{d}}_{possible} \}$ due to estimation errors. Thus, the data estimator 54 is generally configured to determine the estimate for the $N_d$ data symbols 64 so as to correspond to that set of possible symbol alphabet values for the $N_d$ data symbol 64 for which a predetermined measure of a deviation between a function target of the estimate according to the non-systematic mapping function on the one hand, such as

$\breve{\mathbf{G}}\,\hat{\tilde{\mathbf{d}}}$, and the frequency domain samples $\tilde{\mathbf{y}}$ as obtained by the transformer - and optionally as obtained after subtracting the spectrum of UW -, on the other hand, is minimum. The measure may take $\tilde{\mathbf{H}}$ into account. The predetermined measure for the deviation may be defined in the $(N_d + N_r)$-dimensional space of the frequency domain samples $\tilde{\mathbf{y}}$ or, alternatively, within the $N_d$ dimensional space of data symbols 64. For example, the data estimator 54 may be configured to apply the pseudo inverse mapping onto the frequency domain samples 72, i.e. $\tilde{\mathbf{y}}$. According to the notation used in Fig. 5, data estimation stage 75 may, to this end, use the pseudo inverse matrix corresponding to the generator matrix $\breve{\mathbf{G}}$, such as $\mathbf{E}_{BLUE}$ or $\mathbf{E}_{LMMSE}$. That is, to be more precise, the data estimator may be configured to take the channel estimate $\tilde{\mathbf{H}}$ into account, by using the pseudo inverse of $\tilde{\mathbf{H}}\,\breve{\mathbf{G}}$ rather than merely of $\breve{\mathbf{G}}$. Applying such a pseudo inverse matrix onto $\tilde{\mathbf{y}}$ yields $N_d$ data symbol values which, however, have not yet been desymbolized (quantized) onto allowed constellation points of the symbol alphabet. Data estimation stage 75 may then use a hard decision in order to assign each of the $N_d$ data symbols onto one of the allowed constellation points of the symbol alphabet by using, for example, a predetermined fixed subdivision of the constellation space, thereby assigning a set of possible symbol alphabet values to the $N_d$ data symbols as the estimate $\hat{\tilde{\mathbf{d}}}$ for which, in accordance with a predetermined measure, the deviation between the target of the estimate and the actually received $N_d + N_r$ frequency domain samples is, with increased probability, minimum. In other words, the constellation subdivision in accordance with the symbol alphabet used by the data estimation stage 75 to quantize the $N_d$ data symbol values as obtained by the pseudo inverse matrix to the $N_d$ data symbols somehow defines a subdivision of the $N_d + N_r$ dimensional frequency domain of the frequency domain samples 72 so that each sub-area corresponds to exactly and uniquely one of the possible symbol alphabet value sets $\tilde{\mathbf{d}}_{possible}$ for the $N_d$ data symbols. Each sub-area of this $N$ dimensional space collects the points of the $N$ dimensional space for which the distance of the target of the pseudo inverse matrix of the associated possible symbol alphabet value set is smaller than the distances to the target of the pseudo inverse matrix for the other possible symbol alphabet value sets. Thus, the output of the data estimator 54 is the set of the $N_d$ data symbols 64 represented by vector $\hat{\tilde{\mathbf{d}}}$.

Besides the above described linear estimators like LMMSE or BLUE estimator, the data estimator 54 may alternatively use non-linear data estimation schemes like successive interference cancellation (SIC) or a sphere decoding method.

*H. Possible Modifications*

As to the embodiments described above, it is noted that although OFMD transmitter 10 be configured to use a static non-systematic mapping function $\breve{\mathbf{G}}$, i.e. a generator matrix, an adaption to an actual transmission channel would also be feasible. In particular, the non-systematic mapping function could be adapted accordingly. For example, the mapper 12 could be configured to vary the non-systematic mapping function $\breve{\mathbf{G}}$ depending on information from a transmission channel received from the OFDM receiver 50. For example, the OFDM receiver could be configured to estimate the transmission channel such as within channel estimator 74, and send the respective information to the OFDM transmitter so that the mapper 12 may vary the non-systematic mapping function $\breve{\mathbf{G}}$ accordingly. In that case, the OFDM transmitter and OFDM receiver could either be configured to change the non-systematic mapping function synchronously, i.e. using a manner which is equally dependent on the information on the transmission channel, - mapper 12 would change $\breve{\mathbf{G}}$ and data estimation stage 75 would change $\breve{\mathbf{G}}$ or the corresponding pseudo inverse $\mathbf{E}$ accordingly - or the mapper 12 could be configured to signalize to the OFDM receiver as to how the latter shall change the non-systematic mapping function $\breve{\mathbf{G}}$. Respective control data could be sent by the OFDM transmitter externally to the OFDM time domain symbols such as within a preamble of the transmission signal, or within the data symbols. The varying could be performed by switching between different pre-computed representatives of generator matrix $\breve{\mathbf{G}}$. By this measure, computationally complex online computation of the generator matrix $\breve{\mathbf{G}}$ could be avoided.

Many further modifications relative to the description above with respect to F. and G. became clear from the description in the previous sections and the sections which follow. All of these modifications also apply to the above description in paragraphs F and G.

As to the possible implementations, it is also noted that the mapper, the inverse transformer, the transformer and the data estimator may be implemented in hardware, programmable hardware or software. Accordingly, they may comprise an ASIC, FPGA or a programmed computer. As already mentioned above, the OFDM transmitter and the OFDM receiver may additionally comprise the unique word inserter 32 and unique word subtractor 70, respectively. Further, they may additionally comprise the preamble inserter 34 and channel estimator 74, respectively. In addition, as far as the OFDM transmitter is concerned, same may additionally comprise the symbolizer 28 and any additionally preceding module, such as an outer convolutional encoder having a respective outer coding rate or the like. While the outer code is a binary code, the inner code used by mapper 12, i.e. the generator matrix, is an RS code over the field of complex numbers, as already denoted above. Interleaving may also be applied in advance of symbolizer 28. Further, as mentioned above, symbolizer 28 may use a QAM mapping or some other constellation mapping in order to convert the binary sequence 26 into data symbols 20. As far as the OFDM receiver is concerned, same may additionally comprise subsequent to output 58 a demapper for demapping the symbols 64 of the symbol alphabet, i.e. the constellation points, onto binary values so as to generate a binary sequence which may then be subject to the interleaving by a respective deinterleaver and/or outer channel decoding by an outer channel decoder.

*I. Intermediate Summary*

Before presenting results of simulations of embodiments of the present invention, the above discussion shall be briefly summarized. The above description started with an overview over OFDM systems. Normally, a symbol is completely defined in the frequency domain. That is, carriers of an OFDM symbol are filled with data or set to zero (zero subcarriers) for spectral formation. The time domain signal then uniquely and automatically result from the application of the IDFT onto the frequency domain signal. In classical OFDM systems there is, for this reason, no possibility to impose respective requests onto the OFDM time domain signal. Rather, the latter is uniquely determined in the frequency domain. However, according to a UW-OFDM concept, it is an aim that the OFDM time symbol comprises a predetermined portion of a predetermined value such as a zero word, as shown in equation 2. To this end, certain subcarriers are to be loaded with data and zeros for zero subcarriers in a certain (restricted) manner, namely such that the request is fulfilled. In accordance with the UW-OFDM concept of Sec. I this is achieved by introducing dedicated redundant subcarriers which are respectively loaded. Matrix $\tilde{\mathbf{T}}$ can then be optimized according to various criteria. To be more precise, the positions of the redundant subcarriers are chosen in accordance with a certain optimization criterion. As shown above, the optimization criterion may exemplarily be chosen to minimize the mean energy of the redundant subcarriers. This is shown with respect to equation 7. As soon as the positions of the redundant subcarriers have been optimized, matrix $\breve{\mathbf{T}}$ and, consequently, generator matrix $\breve{\mathbf{G}}$ $\mathbf{G}$ can be determined as shown with respect to equation 8. By multiplying vector $\tilde{\mathbf{d}}$ representing the data symbols with a generator matrix $\breve{\mathbf{G}}$, a codeword vector $\tilde{\mathbf{c}}$ results as shown in equation 9. After applying the IDFT matrix $\mathbf{F}_N^{-1}$, the wanted OFDM time domain signal with the given predetermined portion of the predetermined value results.

However, the embodiments of the present invention described above, and the implementations of the same as further discussed below, differ from the UW-OFDM concept of Sec. I. Although the aim is the same, namely generating an OFDM time domain signal comprising the predetermined portion with the predetermined value, the request to have dedicated data subcarriers on the one hand and redundancy subcarriers on the other hand, is given up (see equation 31). Rather, a generator matrix $\breve{\mathbf{G}}$ is found which fulfills as a side condition the request imposed onto the time domain formation of the OFDM time domain signal, and is optimized with regard to a certain criterion (see equation 33 or 37). While the concrete optimization criterion was discussed later, the above discussion then focused on the optimization problem itself. One big problem was the fact that the optimization of $\breve{\mathbf{G}}$ in equation 33 or 37 is dependent on a side condition which is very unsuitable for optimization algorithms. To this end, $\breve{\mathbf{G}}$ was set according to equation 38 so that merely matrix **A** had to be optimized. Resulting therefrom, the side condition is automatically resolved. To be more precise, the side information is automatically fulfilled for each **A** as soon as $\breve{\mathbf{T}}$ is chosen according to equation 41. Afterwards, some methods and criteria were presented which may be used for optimization. Further, some characteristics of the found optimized matrices were deduced. In particular, two exemplary optimization criteria were chosen, namely the error variance on the reception side of the decoding in case of using either a) BLUE or b) the use of the LMMSE estimator. In case of a) reference is made to equations 25 to 30, and regarding case b) reference is made to equations 34 to 36. Additionally, for these optimizations, an AWGN channel has been assumed. This has been done in order to achieve that the optimization problem is solved in a smooth way. Then, afterwards it was shown how the optimization problem may be solved and which characteristics the generator matrixes $\breve{\mathbf{G}}$ found actually have, assuming the AWGN case for the optimization. Thus, one main difference to the UW-OFDM concept of Sec. I is that there are no longer dedicated data subcarriers on the one hand and redundant subcarriers on the other hand. Rather, data and redundancy smear into each other, i.e. are mixed-up. See, for example, equations 38 to 41. Several optimization functions have been specifically described. The initialization of the optimization algorithms of equations 44 and 46, respectively, were merely presented illustratively or representatively for certain decoding schemes.

**IV. On the Relationship between UW-OFDM and UW-SC/FDE**

With the help of a specific constructed code generator matrix non-systematic coded UW-OFDM can be converted into a UW-SC/FDE system. For that it is assumed for the moment that no zero subcarriers are used, or $\mathbf{B} = \mathbf{I} \in \mathsf{R}^{N \times N}$ and $N_d = N - N_r$, and consider the matrix

$$\breve{\mathbf{G}}_{SC} = \mathbf{F}_N \begin{bmatrix} \mathbf{I} \\ \mathbf{0} \end{bmatrix}. \tag{60}$$

$\mathbf{G}_{SC}$ fulfills

$$\breve{\mathbf{G}}_{SC}^H \breve{\mathbf{G}}_{SC} = N\mathbf{I} \quad \text{and} \quad \mathbf{F}_N^{-1}\mathbf{B}\breve{\mathbf{G}}_{SC} = \begin{bmatrix} \mathbf{I} \\ \mathbf{0} \end{bmatrix}, \tag{61}$$

and consequently constitutes an optimum code generator matrix, cf. (54) and (55). Furthermore, it is apparent that $\breve{\mathbf{G}}_{SC}$ generates a UW-SC/FDE signal with a zero UW $\mathbf{x}_u = \mathbf{0}$ since the time domain symbol vector follows to

$$\mathbf{x} = \mathbf{F}_N^{-1}\mathbf{B}\breve{\mathbf{G}}\tilde{\mathbf{d}} = \begin{bmatrix} \mathbf{I} \\ \mathbf{0} \end{bmatrix}\tilde{\mathbf{d}} = \begin{bmatrix} \tilde{\mathbf{d}} \\ \mathbf{0} \end{bmatrix}. \tag{62}$$

Simulation results for a UW-SCFDE system in comparison with systematic coded UW-OFDM can be found in [25].

## V. Simulation Results

In this section, a number of simulation results are presented to show the advantageous features of the above embodiments for non-systematic coded UW-OFDM. In the simulations the transmitter processing starts with optional (outer) channel coding, interleaving and QAM-mapping (QPSK symbols are applied unless specified otherwise). The same outer convolutional encoder as defined in [30] has been used, and results are presented for (outer) coding rates $r = 3/4$ and $r = 1/2$, respectively. Next the complex codewords are determined by either using $\mathbf{G}$, $\breve{\mathbf{G}}'$ or $\breve{\mathbf{G}}''$. Here, $\breve{\mathbf{G}}'$ and $\breve{\mathbf{G}}''$ are the particular code generator matrices discussed in Sec. III-E. We note that the (optional) outer convolutional code is a binary code while the inner code described by $\mathbf{G}$, $\breve{\mathbf{G}}'$ or $\breve{\mathbf{G}}''$ is an RS code over the field of complex numbers. The latter is naturally always inherently present due to the proposed way of generating UW-OFDM symbols with zero UWs at their tails. After applying a code generator matrix (cp. 12 in Fig. 5), zero subcarriers are filled in (cp. B), and the IFFT (inverse fast Fourier transform) is performed (cp. 14 in Fig. 5). Finally, the desired UW is added in time domain (cp. 32 in Fig. 5). At the receiver side the processing for one OFDM symbol starts with an FFT (see 52 in Fig. 6), then the influence of the UW ($\tilde{\mathbf{H}}\mathbf{B}^T\widetilde{\mathbf{x}}_u$) is subtracted (see 70 in Fig. 6), cf. (14)-(15). Next the data estimation is applied (see 54 in Fig. 6). Finally demapping, deinterleaving and (outer) channel decoding are performed. For the applied soft decision Viterbi channel decoder the main diagonal of the appropriate matrix $\mathbf{C}_{\overline{ee}}$ is used to specify the (in case of transmitting over frequency selective channels) varying noise variances along the subcarriers after data estimation.

### A. Simulation Setup

We compare the UW-OFDM approach just described with the classical CP-OFDM concept. The IEEE 802.11a WLAN standard [30] serves as reference system. The same parameters for UW-OFDM are applied as in [30] wherever possible, the most important parameters used in the simulations are specified in Table I. The sampling frequency has been chosen to be $f_s = 20$ MHz.

Table 1:

| Main PHY parameters of the investigated systems. | | |
|---|---|---|
| | 802.11a | UW-OFDM according to just described embodiments |
| Modulation schemes | QPSK, 16QAM | QPSK, 16QAM |
| Coding rates (outer code) | 1/2, 3/4 | 1/2, 3/4 |
| Occupied subcarriers | 52 | 52 |
| Data subcarriers | 48 | 36 |
| Additional subcarriers | 4 (pilots) | 16 (redundant) |
| DFT period | 3.2 $\mu$s | 3.2 $\mu$s |
| Guard duration | 800 ns (CP) | 800 ns (UW) |
| Total OFDM symbol duration | 4 $\mu$s | 3.2 $\mu$s |
| Subcarrier spacing | 312.5 kHz | 312.5 kHz |

As in [30] the indices of the zero subcarriers within an OFDM symbol $\tilde{\mathbf{x}}$ are set to {0, 27, 28,...,37}. The indices of the redundant subcarriers are chosen to be {2, 6, 10, 14, 17, 21, 24, 26, 38, 40, 43, 47, 50, 54, 58, 62} as already discussed in the Example 1 in Sec. I. Note that in conventional CP-OFDM like in the WLAN standard, the total length of an OFDM symbol is given by $T_{DFT}$ + $T_{GI}$. However, the guard interval is part of the DFT period in the UW-OFDM approach which leads to significantly shorter total symbol durations. It is therefore important to mention that the compared systems show (almost) identical bandwidth efficiencies.

Note that in the IEEE 802.11a standard 4 pilot subcarriers are specified. Those are used for estimation and synchronization purposes at the receiver side. In the UW-OFDM approach in accordance with the embodiments of Fig. 5 and 6, these pilots were omitted, because the unique word, which is deterministic, shall (at least) take over the estimation and synchronization tasks which are normally performed with the help of the 4 pilot subcarriers. In order to make a fair BER performance comparison, the energy of the UW related to the total mean energy of a transmit symbol is set to 4/52 in the BER simulations. This exactly corresponds to the total energy of the 4 pilots related to the total mean energy of a transmit symbol in the IEEE standard. As UW, a linear chirp sequence exhibiting the same bandwidth as the data signal, and featuring a constant envelope in time domain and approximately a constant envelope in frequency domain has been applied. However, the particular shape of the UW has no impact on the BER behavior, cf. [2].

*B. Power Spectral Density*

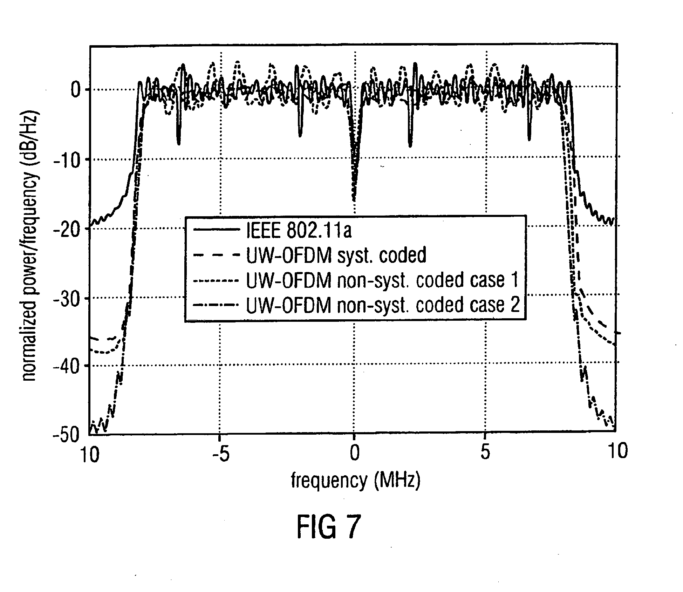

Fig. 7 shows the estimated power spectral densities (PSDs) of simulated UW-OFDM bursts and of a CP-OFDM burst. For all cases a burst composed of a preamble (in all cases the IEEE 802.11a preamble), and a data part consisting of 1000 bytes of data was simulated. An outer channel code with coding rate $r$ =1/2 has been used. For the UW-OFDM concepts ($\mathbf{G}$, $\breve{\mathbf{G}}'$, $\breve{\mathbf{G}}''$) the zero UW for these PSD investigations has exceptionally been applied. Note that no additional filters for spectral shaping were used. Fig. 7 clearly shows that the UW-OFDM spectra feature a significantly better sidelobe suppression compared to the CP-OFDM spectrum. The out-of-band emissions generated by $\mathbf{G}$ and $\breve{\mathbf{G}}'$ are more than 15 dB below the emissions of the CP-OFDM system. The emissions are even notably lower for $\breve{\mathbf{G}}''$. Furthermore, the spectra for $\breve{\mathbf{G}}'$ and $\breve{\mathbf{G}}''$ feature an extremely flat passband region compared to systematic coded UW-OFDM. This can be explained by the fact, that for the systematic coded case the mean power strongly varies between data and redundant subcarriers, cf. Fig. 2, while all subcarriers (except the ones at the band edges) show almost equal power in the non-systematic case.

*C. BER Simulation Results with Perfect Channel Knowledge*

Now, BER simulation results for the AWGN channel as well as for frequency selective environments are shown. To avoid confusion in the figures at first only $\breve{\mathbf{G}}'$ for the non-systematic coded UW-OFDM system is used, and at the end of the section results for $\breve{\mathbf{G}}''$ are also shown and interpreted. Perfect channel knowledge at the receiver is assumed in all simulations.

*1) Results for the AWGN case*

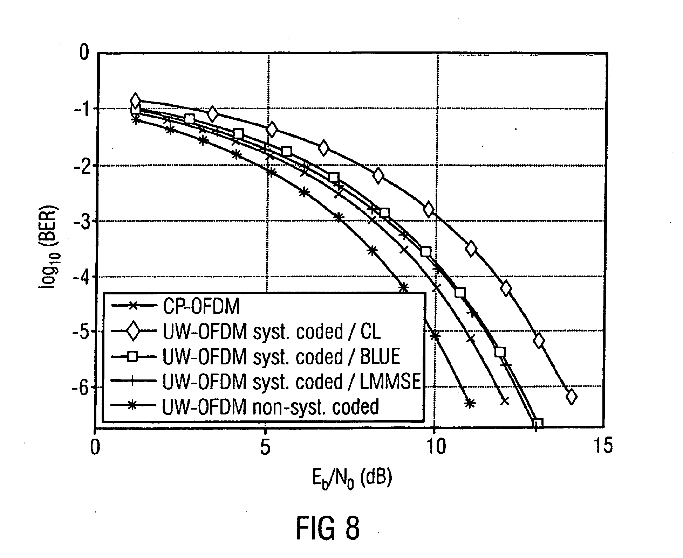

Clearly, OFDM is designed for data transmission in frequency selective environments. Nevertheless, the comparison starts with simulation results in the AWGN channel, since the non-systematic code generator matrices were optimized for that case. In Fig. 8 the BER behavior of the IEEE 802.11a CP-OFDM based standard, and of both, the systematic coded ($\mathbf{G}$) and the non-systematic coded ($\breve{\mathbf{G}}'$) UW-OFDM approach are compared under AWGN conditions. No outer code is used for these simulations. Simulation results are provided for the BLUE and for the LMMSE data estimator, respectively. For the systematic coded system additional results for a simple channel inversion (CI) receiver ($\mathbf{E} = [\mathbf{I}\ \mathbf{0}]\tilde{\mathbf{H}}^{-1}$) are included for comparison reasons. For the systematic coded UW-OFDM system it can be observed that the BLUE and the LMMSE estimator clearly outperform the CI receiver, and the LMMSE estimator performs slightly better than the BLUE. For non-systematic coded UW-OFDM we only plotted one single curve since the BLUE and the LMMSE data estimator perform completely identical. This is somewhat surprising since the error variances after data estimation are not identical, cf. (50) and (57). However, it was found out that in the AWGN case the QPSK symbol estimates of the BLUE and of the LMMSE data estimator always lie in the same decision region of the constellation diagram, and the difference in the error variances does not translate into a difference in the BER performance. To give some numbers, the performances were compared at a bit error ratio of $10^{-6}$. Systematic coded UW-OFDM performs slightly worse compared to the CP-OFDM reference system, the non-systematic coded UW-OFDM system, however, outperforms CP-OFDM by 1 dB and systematic coded UW-OFDM (with LMMSE data estimation) by 1.6 dB, respectively. This is considered a remarkable performance of the novel non-systematic coded UW-OFDM system.

*2) Results for frequency selective environments ($\mathbf{G}$, $\breve{\mathbf{G}}'$):*

We now turn to results in frequency selective indoor environments. Since the LMMSE estimator always outperforms the BLUE in dispersive channels the following discussion concentrates on the LMMSE estimator in the following. For the simulation of indoor multipath channels the model described in [32] has been applied, which has also been used during the IEEE 802.11a standardization process. The channel impulse responses are modeled as tapped delay lines, each tap with uniformly distributed phase and Rayleigh distributed magnitude, and with power decaying exponentially. The model allows the choice of the channel delay spread. For the following simulations we have generated and stored 5000 realizations of channel impulse responses, all featuring a delay spread of 100 ns and a total length not exceeding the guard interval duration. Furthermore, the channel impulse responses have been normalized such that the receive power is independent of the actual channel. The subsequent figures represent BER results averaged over that 5000 channel realizations.

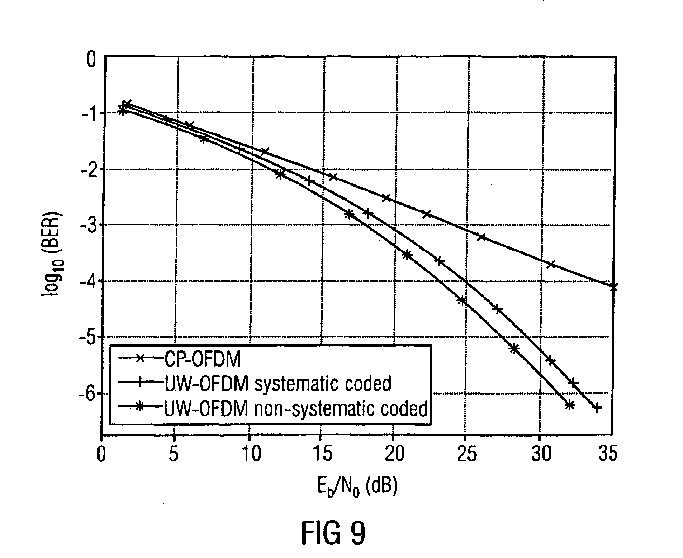

We start with simulation results for the case no outer code is used, cf. Fig. 9. The gain achieved by systematic coded UW-OFDM over CP-OFDM is already remarkable. Besides the coding gain achieved by $\mathbf{G}$ together with the LMMSE data estimator this mainly comes from the fact, that due to the precoding property of $\mathbf{G}$ data symbols corresponding to deep fading holes in the channel's frequency response can still be detected reasonably, since portions of these data symbols are also available at redundant subcarriers. Further, the non-systematic coded UW-OFDM system outperforms the systematic coded one by another 1.6 dB, even though $\breve{\mathbf{G}}'$ has been optimized for the AWGN channel case.

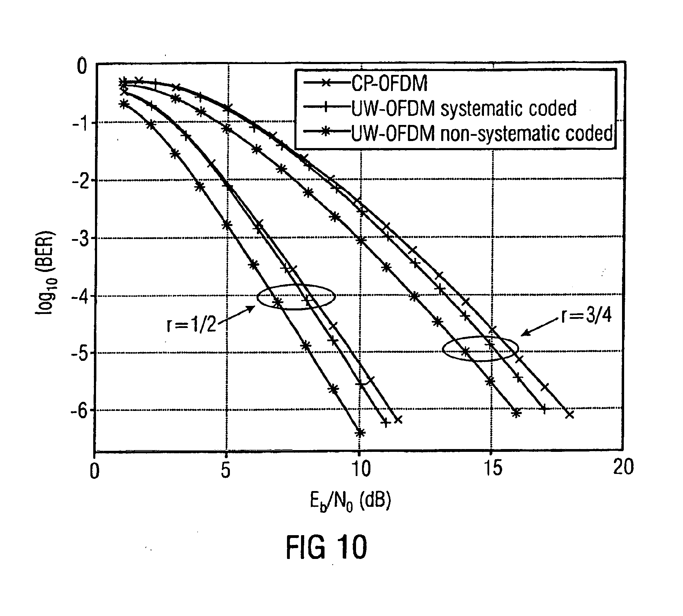

Next, simulation results for the case the additional outer channel code is used, cf. Fig. 10, are presented. For both outer coding rates the UW-OFDM approaches outperform CP-OFDM, and non-systematic coded UW-OFDM shows by far the best performance. The gains of non-systematic coded UW-OFDM over CP-OFDM at a bit error ratio of $10^{-6}$ are 1.9 dB and 1.7 dB for $r = \frac{3}{4}$ and $r = \frac{1}{2}$, respectively, the gains over systematic coded UW-OFDM are 1.1 dB for both coding rates.

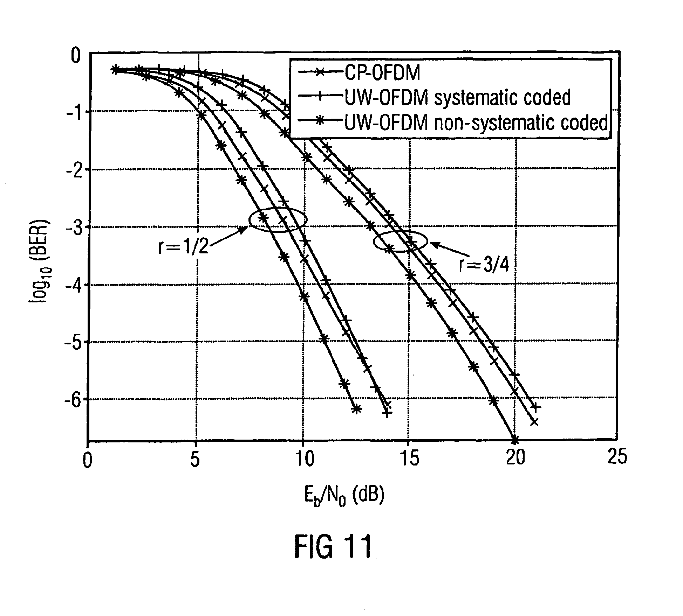

Similar tendencies can also be observed in case 16QAM symbols are applied as modulation alphabet, cf. Fig. 11. Non-systematic coded UW-OFDM again significantly outperforms CP-OFDM by 1.6 dB and 1.3 dB for $r = \frac{1}{2}$ and $r = \frac{3}{4}$, respectively (again measured at a bit error ratio of $10^{-6}$). However, the gain of systematic coded UW-OFDM over CP-OFDM shrinks to 0.2 dB for $r = \frac{1}{2}$, and even turns to a loss of 0.5 dB for $r = \frac{3}{4}$. Consequently and quite remarkably, the achieved gain of $\breve{\mathbf{G}}'$ over $\mathbf{G}$ turns out to be notably larger in case of 16QAM compared to QPSK modulation.

*3) Results for frequency selective envirorements ($\breve{\mathbf{G}}'$, $\breve{\mathbf{G}}''$)*

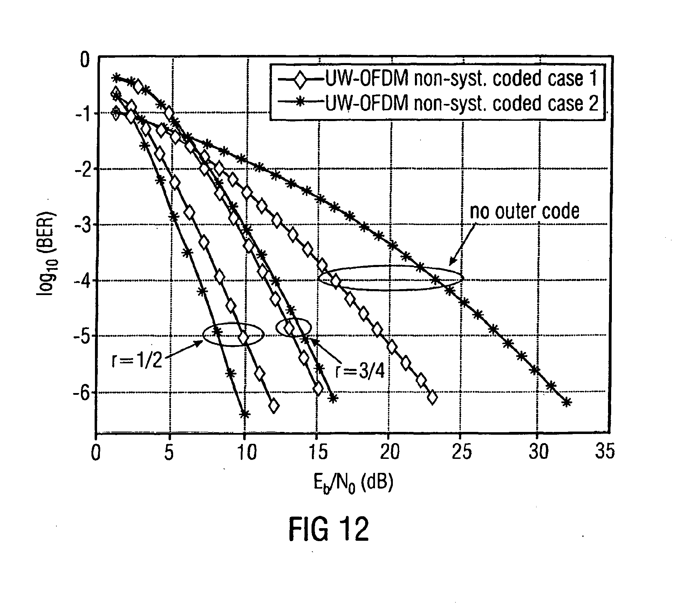

Finally the performance of the two different derived code generator matrices $\breve{\mathbf{G}}'$ and $\breve{\mathbf{G}}''$ are compared. In the AWGN channel, they feature exactly the same performance. This was expected since every optimum code generator matrix shows the same error covariance matrix for the AWGN case. However, they feature quite a different behavior in dispersive channels. In Sec. III-E the different structures of $\breve{\mathbf{G}}'$ and the particularly chosen $\breve{\mathbf{G}}''$ have already been discussed. The reader is reminded that $\breve{\mathbf{G}}'$ is constructed such that the energy of one data symbol is mainly (however, not exclusively) spread locally. $\breve{\mathbf{G}}'$ can be regarded as the natural perfecting of **G**. In contrast $\breve{\mathbf{G}}''$ spreads the energy of each data symbol approximately uniformly over the codeword $\tilde{\mathbf{c}}$. From this point of view the system with $\breve{\mathbf{G}}''$ behaves comparable to a single carrier system, where the energy of each individual QAM symbol is also approximately uniformly distributed over the whole bandwidth. In contrast the system with $\breve{\mathbf{G}}'$ still rather shows more similarity to classical OFDM, where a subcarrier exactly corresponds to one QAM symbol. Fig. 12 shows that $\breve{\mathbf{G}}''$ features extremely good performance without an outer code, it significantly outperforms $\breve{\mathbf{G}}'$ in that case. For $r = \frac{3}{4}$ $\breve{\mathbf{G}}''$ still performs slightly better than $\breve{\mathbf{G}}'$, while for $r = \frac{1}{2}$ $\breve{\mathbf{G}}'$ clearly outperforms $\breve{\mathbf{G}}''$. The coding gain achieved by a strong outer code in a frequency selective channel is high for $\breve{\mathbf{G}}'$ as it might be expected for a system rather related to classical OFDM, while it is comparably low for $\breve{\mathbf{G}}''$ with its precoding properties making the transceiver rather behave like a single carrier system.

*D. BER Simulation Results for Imperfect Channel Knowledge*

Up till now, performance results assuming perfect channel knowledge at the receiver were presented. In this subsection the effect of channel estimation errors on the BER performance is investigated. Since in UW-OFDM the channel $\tilde{\mathbf{H}}$ is incorporated into the receiver processing quite in a different way as in CP-OFDM, it is not immediately obvious whether channel estimation errors will degrade the systems' BER performance in the same scale. While in CP-OFDM the data estimator is simply given by $\mathbf{E} = \tilde{\mathbf{H}}^{-1}$, possible data estimators for UW-OFDM are given by (20) and (22), respectively. $\tilde{\mathbf{H}}$ is usually replaced by an estimated version $\hat{\tilde{\mathbf{H}}}$, which has a degrading impact on the BER performance. In UW-OFDM channel estimation errors have an additional impact, namely in the processing step where the influence of the UW is subtracted from the received symbol, cf. (14)-(15).

To investigate the influence of channel estimation errors a standard preamble based channel estimation procedure has been applied, which is briefly described below. Same may be used in boxes 34 and 74 in Figs. 5 and 6. The IEEE 802.11a preamble defined in [30] is used. This preamble contains two identical BPSK (binary phase shift keying) modulated OFDM symbols (preceded by a guard interval) dedicated to channel estimation which is denoted by $\mathbf{x}_p = \mathbf{x}_{p_1} = \mathbf{x}_{p_2} \in \mathbb{C}^{N \times 1}$. Note that for the downsized frequency domain version $\tilde{\mathbf{x}}_{p,d} = \mathbf{B}^T \mathbf{F}_N \mathbf{x}_p$ we have $\tilde{\mathbf{x}}_{p,d} \in \{-1,1\}^{(N_d + N_r) \times 1}$. Let $\mathbf{y}_{p1}$ and $\mathbf{y}_{p2}$ be the received noisy preamble symbols, and let $\bar{\tilde{\mathbf{y}}}_{p,d} = \mathbf{B}^T \mathbf{F}_N (\mathbf{y}_{p_1} + \mathbf{y}_{p_2})/2$. Then a first course unbiased estimate of the vector of channel frequency response coefficients naturally follows as

$$\widehat{\bar{\mathbf{h}}}_1[k] = \frac{\bar{\tilde{\mathbf{y}}}_{p,d}[k]}{\tilde{\mathbf{x}}_{p,d}[k]} = \bar{\tilde{\mathbf{y}}}_{p,d}[k]\tilde{\mathbf{x}}_{p,d}[k] \tag{63}$$

for $k = 0,..., (N_d + N_r\text{-}1)$. The latter step is true since $\tilde{\mathbf{x}}_{p,d}[k] \in \{-1,1\}$. This course channel estimate can be significantly improved or rather noise reduced by making the usually valid assumption that the channel impulse response does not exceed the guard duration $N_u$. With the vector of channel impulse response coefficients $\mathbf{h} \in \mathbb{C}^{N_u \times 1}$ and its zero padded version $\mathbf{h}_c \in \mathbb{C}^{N \times 1}$, respectively, this assumption can be incorporated by modeling the course channel estimate as

$$\hat{\tilde{\mathbf{h}}}_1 = \mathbf{B}^T \mathbf{F}_N \mathbf{h}_c + \tilde{\mathbf{n}}$$

$$= \mathbf{B}^T \mathbf{F}_N \begin{bmatrix} \mathbf{h} \\ \mathbf{0} \end{bmatrix} + \tilde{\mathbf{n}}, \qquad (64)$$

where $\tilde{\mathbf{n}} \in \mathbb{C}^{(N_d + N_r) \times 1}$ represents a zero-mean Gaussian (frequency domain) noise vector. By decomposing the DFT matrix as $\mathbf{F}_N = [\mathbf{M}_1 \ \mathbf{M}_2]$ with $\mathbf{M}_1 \in \mathbb{C}^{N \times N_v}$ and $\mathbf{M}_2 \in \mathbb{C}^{N \times (N - N_v)}$, (64) can be re-written as

$$\hat{\tilde{\mathbf{h}}}_1 = \mathbf{B}^T \mathbf{M}_1 \mathbf{h} + \tilde{\mathbf{n}}. \qquad (65)$$

From the linear model in (65) the MVU estimator of the channel impulse response follows to

$$\hat{\mathbf{h}} = \left( \mathbf{M}_1^H \mathbf{B} \mathbf{B}^T \mathbf{M}_1 \right)^{-1} \mathbf{M}_1^H \mathbf{B} \hat{\tilde{\mathbf{h}}}_1, \qquad (66)$$

cf. [31]. Going back to frequency domain, and again excluding the zero subcarriers from further operation, delivers the final and highly noise reduced frequency domain channel estimate

$$\hat{\tilde{\mathbf{h}}}_2 = \mathbf{B}^T \mathbf{F}_N \begin{bmatrix} \hat{\mathbf{h}} \\ \mathbf{0} \end{bmatrix}$$

$$= \underbrace{\mathbf{B}^T \mathbf{M}_1 \left( \mathbf{M}_1^H \mathbf{B} \mathbf{B}^T \mathbf{M}_1 \right)^{-1} \mathbf{M}_1^H \mathbf{B}}_{\mathbf{W}} \hat{\tilde{\mathbf{h}}}_1. \qquad (67)$$

Note that the smoothing matrix $\mathbf{W} \in \mathbb{C}^{(N_d + N_r) \times (N_d + N_r)}$ does not depend on the channel, and has to be calculated only once during system design. The preamble based estimate of the channel matrix is therefore given by $\hat{\tilde{\mathbf{H}}} = \mathrm{diag}\{\hat{\tilde{\mathbf{h}}}_2\}$.

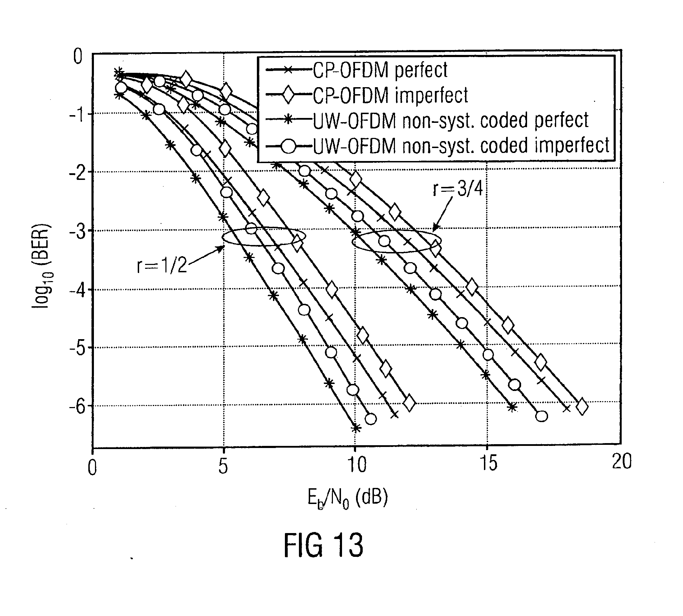

Fig. 13 compares the performance loss of CP-OFDM and non-systematic coded UW-OFDM ($\breve{\mathbf{G}}'$) in case the described preamble based channel estimate given by (67) is used instead of perfect channel knowledge. As a highly interesting result we notice that both systems degrade by about the same scale: CP-OFDM experiences a loss of 0.8 dB for $r = 1/2$ and 0.6 dB for $r = 3/4$, respectively (all results again measured at a BER of $10^{-6}$), while the performance of UW-OFDM degrades by 0.7 dB for both coding rates.

## VI. Conclusion

In the above embodiments, the systematic coded UW-OFDM concept to non-systematic coded UW-OFDM concept of Sec. I has been expanded. For that, optimized code generator matrices were used that distribute the redundancy over all subcarriers instead of only over a dedicated set. Optimization criteria were derived to find a class of code generator matrices that in case of AWGN conditions ensure minimum error variances on the subcarriers after the estimation process at the receiver. However, due to the advantageous combination of the channel coding and precoding abilities of the optimized code generator matrices, non-systematic coded UW-OFDM particularly features its superior performance in frequency selective channels. Simulation results for selected code generator matrices in the AWGN case as well as in frequency selective environments were shown. It turns out that non-systematic coded UW-OFDM impressively outperforms systematic coded UW-OFDM and classical CP-OFDM w.r.t. the spectral and the bit error ratio behavior.

Thus, the concept of UW-OFDM (unique word orthogonal frequency division multiplexing) of Sec. I has been expanded. In UW-OFDM the cyclic prefixes (CPs) are replaced by deterministic sequences, the so-called unique words (UWs). The UWs are generated by appropriately loading a set of redundant subcarriers. By that a systematic complex number Reed Solomon (RS) code construction is introduced in a quite natural way, because an RS code may be defined as the set of vectors, for which a block of successive zeros occurs in the other domain w.r.t. a discrete Fourier transform. (For a fixed block different to zero, i.e. a UW, a coset code of an RS code is generated.) A remaining problem in the original systematic coded UW-OFDM concept was the fact that the redundant subcarrier symbols disproportionately contribute to the mean OFDM symbol energy. The above-mentioned embodiments introduce the concept of non-systematic coded UW-OFDM, where the redundancy is no longer allocated to dedicated subcarriers, but distributed over all subcarriers. Optimum complex valued code generator matrices matched to the BLUE (best linear unbiased estimator) and to the LMMSE (linear minimum mean square error) data estimation, respectively, have been shown. With the help of simulations, the advantageous spectral properties and the superior BER (bit error ratio) performance of non-systematic coded UW-OFDM compared to systematic coded UW-OFDM and to CP-OFDM in AWGN (additive white Gaussian noise) and in frequency selective environments were highlighted.

Appendix A:

Derivation of the Global Minimum of $J_{\text{BLUE}}$

In Appendix A we proof that the gradient of the cost function $J_{\text{BLUE}}$ with respect to the vector $\mathbf{s} = [s_1\ s_2\ \cdots\ s_{N_d}]^T$ of singular values of $\breve{\mathbf{G}}$ is zero if and only if all singular values are identical. And we proof that every local minimum of the cost function $J_{\text{BLUE}}$ is also a global minimum with $J_{\text{BLUE,min}} = \sigma_d^2 N_d / c$. Using the SVD in (51) we have

$$
\begin{aligned}
\operatorname{tr}\{\breve{\mathbf{G}}^H \breve{\mathbf{G}}\} &= \operatorname{tr}\{\mathbf{V}\mathbf{S}^H \mathbf{U}^H \mathbf{U}\mathbf{S}\mathbf{V}^H\} = \operatorname{tr}\{\mathbf{V}\mathbf{D}^2\mathbf{V}^H\} \\
&= \operatorname{tr}\{\mathbf{D}^2\},
\end{aligned} \tag{68}
$$

$$
\begin{aligned}
(\breve{\mathbf{G}}^H \breve{\mathbf{G}})^{-1} &= (\mathbf{V}\mathbf{S}^H \mathbf{U}^H \mathbf{U}\mathbf{S}\mathbf{V}^H)^{-1} = (\mathbf{V}\mathbf{D}^2\mathbf{V}^H)^{-1} \\
&= \mathbf{V}(\mathbf{D}^2)^{-1}\mathbf{V}^H.
\end{aligned} \tag{69}
$$

Inserting (68) and (69) into (30) leads to the following expression for the cost function

$$
\begin{aligned}
J_{\text{BLUE}} &= \frac{\sigma_d^2}{cN_d} \operatorname{tr}\{\mathbf{D}^2\} \operatorname{tr}\left\{\mathbf{V}(\mathbf{D}^2)^{-1}\mathbf{V}^H\right\} \\
&= \frac{\sigma_d^2}{cN_d} \operatorname{tr}\{\mathbf{D}^2\} \operatorname{tr}\left\{(\mathbf{D}^2)^{-1}\right\} \\
&= \frac{\sigma_d^2}{cN_d} \left(s_1^2 + s_2^2 + \cdots s_{N_d}^2\right)\left(\frac{1}{s_1^2} + \frac{1}{s_2^2} + \cdots \frac{1}{s_{N_d}^2}\right),
\end{aligned} \tag{70}
$$

which can now be regarded as a function of the singular values of $\breve{\mathbf{G}}$. The gradient of $J_{\text{BLUE}}$ with respect to $\mathbf{s}$ follows to

$$\frac{\partial J_{\text{BLUE}}}{\partial \mathbf{s}} = \frac{2\sigma_d^2}{cN_d} \times \begin{bmatrix} s_1 \left( \dfrac{1}{s_1^2} + \cdots \dfrac{1}{s_{N_d}^2} \right) - s_1^{-3} \left( s_1^2 + \cdots s_{N_d}^2 \right) \\ \vdots \\ s_{N_d} \left( \dfrac{1}{s_1^2} + \cdots \dfrac{1}{s_{N_d}^2} \right) - s_{N_d}^{-3} \left( s_1^2 + \cdots s_{N_d}^2 \right) \end{bmatrix}. \qquad (71)$$

Setting the gradient to zero leads to the system of equations

$$s_1^4 \left( \frac{1}{s_1^2} + \cdots \frac{1}{s_{N_d}^2} \right) = s_1^2 + \cdots s_{N_d}^2$$

$$\vdots$$

$$s_{N_d}^4 \left( \frac{1}{s_1^2} + \cdots \frac{1}{s_{N_d}^2} \right) = s_1^2 + \cdots s_{N_d}^2. \qquad (72)$$

It is easy to see that $s_1 = s_2 = \cdots s_{N_d} := s$ solves the system of equations. Furthermore, by subtracting the $i^{\text{th}}$ equation from the $j^{\text{th}}$ equation for all $i, j \in \{1,..., N_d\}$ with $i \neq j$ it immediately follows that $s_1 = s_2 = ... s_{N_d}$ is in fact the only solution to this system of equations. Consequently, every possible candidate $\breve{\mathbf{G}}$ for a local minimum satisfies $\breve{\mathbf{G}}^H \breve{\mathbf{G}} = s^2 \mathbf{I}$ (cf. (52) and its implications). Inserting $\breve{\mathbf{G}}^H \breve{\mathbf{G}} = s^2 \mathbf{I}$ into the cost function (30) leads to the same expression as in (48) that corresponds to the numerically found local minima. Hence, every $\breve{\mathbf{G}}$ fulfilling $\breve{\mathbf{G}}^H \breve{\mathbf{G}} = s^2 \mathbf{I}$ results in the same (and minimum) value $J_{\text{BLUE,min}} = \sigma_d^2 N_d / c$ which therefore constitutes the global minimum of the cost function.

Appendix B

Derivation of the Global Minimum of $J_{\text{LMMSE}}$

In Appendix B we proof that $\partial J_{\text{LMMSE}} / \partial \mathbf{s} = \mathbf{0}$ if and only if all singular values are identical. And we proof that every local minimum of the cost function $J_{\text{LMMSE}}$ is also a global minimum with $J_{\text{LMMSE,min}} = \sigma_d^2 N_d / (c+1)$. Inserting (68) and (69) into (36) leads to the following expression for the cost function

$$J_{\text{LMMSE}} = \sigma_d^2 \text{tr} \left\{ \left( \frac{cN_d}{\text{tr}\{\mathbf{D}^2\}} \mathbf{V} \mathbf{D}^2 \mathbf{V}^H + \mathbf{I} \right)^{-1} \right\}, \qquad (73)$$

which can be regarded as a function of the singular values of $\breve{\mathbf{G}}$. Applying the matrix inversion lemma we immediately obtain

$$J_{\text{LMMSE}} = \sigma_d^2 \text{tr}\left\{ \mathbf{I} - \mathbf{V}\left( \mathbf{V}^H\mathbf{V} + \frac{\text{tr}\{\mathbf{D}^2\}}{cN_d}(\mathbf{D}^2)^{-1} \right)^{-1}\mathbf{V}^H \right\}$$

$$= \sigma_d^2\left( N_d - \text{tr}\left\{ \left( \mathbf{I} + \frac{\text{tr}\{\mathbf{D}^2\}}{cN_d}(\mathbf{D}^2)^{-1} \right)^{-1} \right\} \right). \tag{74}$$

With this step we achieved, that every matrix to be inverted in (74) has a diagonal structure. Having in mind that $\mathbf{D}^2$ is a diagonal matrix with the squared singular values of $\breve{\mathbf{G}}$ on its main diagonal, and after some rearrangements we obtain

$$J_{\text{LMMSE}} = \sigma_d^2 N_d - \sigma_d^2 cN_d \sum_{i=1}^{N_d} \frac{s_i^2}{cN_d s_i^2 + \text{tr}\{\mathbf{D}^2\}}. \tag{75}$$

The partial derivation of the cost function $J_{\text{LMMSE}}$ with respect to the $j^{\text{th}}$ singular value follows to

$$\frac{\partial J_{\text{LMMSE}}}{\partial s_j} = -2\sigma_d^2 cN_d s_j \times \sum_{\{i:i\neq j\}}\left[ \frac{s_i^2}{(cN_d s_j^2 + \text{tr}\{\mathbf{D}^2\})^2} - \frac{s_j^2}{(cN_d s_i^2 + \text{tr}\{\mathbf{D}^2\})^2} \right]. \tag{76}$$

It is easy to see that $\partial J_{\text{LMMSE}}/\partial s_i = 0$ is fulfilled if $s_i = s_j$ for all $i \in \{1,..., N_d\}$ with $i \neq j$. In fact $s_1 = ... = s_{N_d} = s$ is the only solution to $\partial J_{\text{LMMSE}}/\partial \mathbf{s} = \mathbf{0}$. This can be proved by subtracting the equations resulting from $\partial J_{\text{LMMSE}}/\partial s_i = 0$ and $\partial J_{\text{LMMSE}}/\partial s_i = 0$ for all $i \neq j$, which is not difficult but a kind of exhausting. The remaining argumentation coincides with the one for the BLUE in Appendix A. However, the expression for the global minimum $J_{\text{LMMSE,min}} = \sigma_d^2 N_d/(c+1)$ which is obtained by inserting $\breve{\mathbf{G}}^H\breve{\mathbf{G}} = s^2\mathbf{I}$ into (36) differs from $J_{\text{BLUE,min}}$.

Final notes

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[1] M. Huemer, C. Hofbauer, J.B. Huber, "The Potential of Unique Words in OFDM," in the Proceedings of the 15th International OFDM-Workshop, Hamburg, Germany, pp. 140-144, September 2010.

[2] A. Onic, M. Huemer, "Direct versus Two-Step Approach for Unique Word Generation in UW-OFDM," in the Proceedings of the 15th International OFDM-Workshop, Hamburg, Germany, pp.145-149, September 2010.

[3] R. van Nee, R. Prasad, OFDM for Wireless Multimedia Communications, Artech House Publishers, Boston, 2000.

[4] S. Tang, F. Yang, K. Peng, C. Pan, K. Gong, Z. Yang, "Iterative channel estimation for block transmission with known symbol padding - a new look at TDS-OFDM," in the Proceedings of the IEEE Global Telecommunications Conference (GLOBECOM 2007), pp. 4269-4273, Nov. 2007.

[5] D. Van Welden, H. Steendam, M. Moeneclaey, "Iterative DA/DD channel estimation for KSP-OFDM," in the Proceedings of the IEEE International Conference on Communications ICC 2008), pp. 693-697, May 2008.

[6] Y. P. Lin, S. M. Phoong, P. P. Vaidyanathan, Filter Bank Transceivers for OFDM and DMT Systems, Cambridge University Press, Cambridge 2011.

[7] R.E. Blahut, Algebraic Codes for Data Transmission, Cambridge University Press, New York, 2003.

[8] C. Hofbauer, M. Huemer, J. B. Huber, "Coded OFDM by Unique Word Prefix," in the Proceedings of the IEEE International Conference on Communication Systems (IEEE ICCS' 2010), Singapore, 5 pages, November 2010.

[9] M. Huemer, A. Onic, C. Hofbauer, "Classical and Bayesian Linear Data Estimators for Unique Word OFDM," accepted for publication in the IEEE Transactions on Signal Processing.

[10] H. Sari, G. Karam, I. Jeanclaude, "An Analysis of Orthogonal Frequency-Division Multiplexing for Mobile Radio Applications," in the Proceedings of the IEEE Vehicular Technology Conference (VTC '94), Stockholm, Sweden, pages 1635-1639, June 1994.

[11] H. Sari, G. Karam, I. Jeanclaude, "Frequency-Domain Equalization of Mobile Radio and Terrestrial Broadcast Channels," in the Proceedings of the IEEE International Conference on Global Communications (GLOBECOM'94), San Francisco, USA, pages 1-5, 1994.

[12] A. Czylwik, "Comparison between Adaptive OFDM and Single Carrier Modulation with Frequency Domain Equalization," in the Proceedings of the IEEE Vehicular Technology Conference (VTC '97), Phoenix, USA, pages 865-869, May 1997.

[13] G. Kadel, "Diversity and Equalization in the Frequency Domain - a Robust and Flexible Receiver Technology for Broadband Mobile Communication Systems," in the Proceedings of the IEEE Vehicular Technology Conference (VTC '97), Phoenix, USA, pages 894-898, May 1997.

[14] M. V. Clark, "Adaptive frequency-domain equalization and diversity combining for broadband wireless communications," in the IEEE Journal on Selected Areas in Communications, Vol. 16, No. 8, pages 1385-1395, October 1998.

[15] M. Huemer, L. Reindl, A. Springer, R. Weigel, "Implementation Aspects on Single Carrier Transmission with Frequency Domain Equalization," in the Proceedings of the 4th International OFDM-Workshop '99, Hamburg, Germany, pages 18.1-18.4, September 1999.

[16] M. Huemer, "Frequenzbereichsentzerrung für hochratige Eintrager-Übertragungssysteme in Umgebungen mit ausgeprägter Mehrwegeausbreitung," Dissertation, Institute for Communications and Information Engineering, University of Linz, Austria, 1999 (in German).

[17] L. Deneire, B. Gyselinckx, M. Engels, "Training Sequence vs. Cyclic Prefix: A New Look on Single Carrier Communication," in the Proceedings of the IEEE International Conference on Global Communications (GLOBECOM '2000), pages 1056-1060, November 2000.

[18] R. Cendrillon, M. Moonen, "Efficient equalizers for single and multi-carrier environments with known symbol padding," in the Proceedings of the IEEE International Symposium on Signal Processing and its Applications (ISSPA 2001), August 2001, Pages 607-610.

[19] H. Witschnig, T. Mayer, A. Springer, A. Koppler, L. Maurer, M. Huemer, R. Weigel, "A Different Look on Cyclic Prefix for SC/FDE," in the Proceedings of the 13th IEEE International Symposium on Personal, Indoor and Mobile Radio Communications (PIMRC 2002), Lisbon, Portugal, pages 824-828, September 2002.

[20] H. Witschnig, T. Mayer, A. Springer, L. Maurer, M. Huemer, R. Weigel, "The Advantages of a Known Sequence versus Cyclic Prefix in an SC/FDE System," in the Proceedings of the 5th International Symposium on Wireless Personal Multimedia Communications (WPMC' 2002), Honolulu, Hawaii, pages 1328-1332, October 2002.

[21] M. Huemer, A. Koppler, L. Reindl, R. Weigel, "A Review of Cyclically Extended Single Carrier Transmission with Frequency Domain Equalization for Broadband Wireless Transmission," in the European Transactions on Telecommunications (ETT), Vol. 14, No. 4, pages 329-341, July/August 2003.

[22] M. Huemer, H. Witschnig, J. Hausner, "Unique Word Based Phase Tracking Algorithms for SC/FDE Systems," in the Proceedings of the IEEE International Conference on Global Communications (GLOBECOM' 2003), San Francisco, USA, 5 pages, December 2003.

[23] H. Witschnig, "Frequency Domain Equalization for Broadband Wireless Communication - With Special Reference to Single Carrier Transmission Based on Known Pilot Sequences," Dissertation, University of Linz, Institute for Communications and Information Engineering, 2004.

[24] S. Reinhardt, T. Buzid, M. Huemer, "MIMO Extensions for SC/FDE Systems," in the Proceedings of the European Conference on Wireless Technology (ECWT' 2005), Paris, France, pp. 109-112, October 2005.

[25] M. Huemer, C. Hofbauer, J.B. Huber, "Unique Word Prefix in SC/FDE and OFDM: A Comparison," in the Proceedings of the IEEE GLOBECOM 2010 Workshop on Broadband Single Carrier and Frequency Domain Communications (BSCFDC 2010), Miami, USA, pp. 1321-1326, December 2010.

[26] M. Muck, M. de Courville, P. Duhamel, "A pseudorandom postfix OFDM modulator - semi-blind channel estimation and equalization," in the IEEE Transactions on Signal Processing, Vol. 54, Issue 3, pp 1005-1017, March 2006.

[27] L. Jingyi, P. Joo, J. Ro, "The effect of filling Unique Words to guard interval for OFDM," Document IEEE C802.16a-02/87, IEEE 802.16 Broadband Wireless Access Working Group, September 2002.

[28] C. Hofbauer, M. Huemer, J.B. Huber, "On the Impact of Redundant Subcarrier Energy Optimization in UW-OFDM," in the Proceedings of the 4th International Conference on Signal Processing and Communication Systems (ICSPCS 2010), Gold Coast, Australia, 6 pages, December 2010.

[29] M. Huemer, C. Hofbauer, J.B. Huber, "Complex Number RS Coded OFDM with Systematic Noise in the Guard Interval," in the Proceedings of the 44th ASILOMAR Conference on Signals, Systems and Computers, Pacific Grove, USA, pp. 1023-1027, November 2010.

[30] IEEE Std 802.11a-1999, Part 11: Wireless LAN Medium Access Control (MAC) and Physical Layer (PHY) specifications: High-Speed Physical Layer in the 5 GHz Band, 1999.

[31] S. Kay, Fundamentals of Statistical Signal Processing: Estimation Theory, Prentice Hall, Rhode Island 1993.

[32] J. Fakatselis, Criteria for 2.4 GHz PHY Comparison of Modulation Methods. Document IEEE 1997; P802.11-97/157r1.

**Claims**

1. OFDM transmitter comprising
   a mapper (12) configured to map $N_d$ data symbols (20), $\tilde{\mathbf{d}}$, onto $N$ frequency domain samples (22) with $N > N_d$;
   an inverse transformer (14) configured to transfer the $N$ frequency domain samples (22) from frequency domain to time domain to obtain an OFDM time domain symbol (24),

   wherein the mapper is configured to use a non-systematic mapping function $\breve{\mathbf{G}}$ describing a non-systematic code so that the $N_d$ data symbols do not appear in $\breve{\mathbf{G}}\,\tilde{\mathbf{d}}$ to map the $N_d$ data symbols onto $N_d + N_r \leq N$ of the $N$ frequency domain samples such that the OFDM time domain symbol (24) comprises a predetermined portion of a predetermined value independent from the $N_d$ data symbols.

2. OFDM transmitter according to claim 1, wherein the mapper is configured such that the predetermined value is zero and the OFDM transmitter further comprises a unique word inserter (32) configured to insert a unique word (35) at the predetermined portion (30) of the OFDM symbol (24) to obtain an OFDM transmit symbol (36).

3. OFDM transmitter according to any of claims 1 or 2, wherein the OFDM mapper (12) is configured such that $N > N_d + N_r$ and to insert zero subcarriers besides the $N_d + N_r$ frequency domain samples.

4. OFDM transmitter according to any of the previous claims, wherein the mapper (12) is configured such that the non-systematic mapping function is a $(N_d + N_r) \times N_d$ matrix $\breve{\mathbf{G}}$ obeying

$$\breve{\mathbf{G}} = \mathbf{AP}\!\left[\frac{\mathbf{I}}{\mathbf{T}}\right]$$

with $\breve{\mathbf{T}}$ being a $N_r \times N_d$ matrix constructed according to

$$\breve{\mathbf{T}} = -(\breve{\mathbf{M}}_{22})^{-1}\breve{\mathbf{M}}_{21}$$

from a $N_r \times N_r$ submatrix $\breve{\mathbf{M}}_{22}$ and a $N_r \times N_d$ submatrix $\breve{\mathbf{M}}_{21}$ of

$$\breve{\mathbf{M}} = \mathbf{F}_N^{-1}\mathbf{BAP} = \begin{bmatrix} \breve{\mathbf{M}}_{11} & \breve{\mathbf{M}}_{12} \\ \breve{\mathbf{M}}_{21} & \breve{\mathbf{M}}_{22} \end{bmatrix},$$

where $\mathbf{F}_N$ is a length-$N$-DFT matrix, $\mathbf{B}$ is a $N$ x $(N_d + N_r)$ matrix resulting from a $(N_d + N_r)$ x $(N_d + \mathbf{N_r})$ unity matrix by inserting $N - N_d - N_r$ zero rows wherein $\mathbf{P}$ is a $(N_d + N_r)$ x $(N_d + N_r)$ permutation matrix and $\mathbf{A}$ is a $(N_d + N_r)$ x $(N_d + N_r)$ non-singular matrix so that $\mathbf{F}_N^{-1}\mathbf{BAP}\begin{bmatrix} \mathbf{I} \\ \tilde{\mathbf{T}} \end{bmatrix} = \begin{bmatrix} * \\ \mathbf{0} \end{bmatrix}$.

5. OFDM transmitter according to any of the previous claims, wherein the mapper is configured such that the non-systematic mapping function is a $(N_d + N_r)$ x $N_d$ matrix $\breve{\mathbf{G}}$ satisfying

$$\breve{\mathbf{G}}^H\breve{\mathbf{G}} = s^2\mathbf{I}$$

and

$$\mathbf{F}_N^{-1}\mathbf{B}\breve{\mathbf{G}} = \begin{bmatrix} * \\ \mathbf{0} \end{bmatrix},$$

wherein $s$ is a common singular value of $\breve{\mathbf{G}}$, $\mathbf{F}_N$ is a length-N-DFT matrix and $\mathbf{B}$ is a $N$ x $(N_d + N_r)$ matrix resulting from a $(N_d + N_r)$ x $(N_d + N_r)$ unity matrix by inserting $N - N_d - N_r$ zero rows.

6. OFDM transmitter according to any of the previous claims, wherein the mapper is configured to vary the non-systematic mapping function $\tilde{\mathbf{G}}$ depending on information on a transmission channel received from an OFDM receiver.

7. OFDM transmitter according to any of the previous claims, wherein the mapper is configured to vary the non-systematic mapping function $\tilde{\mathbf{G}}$ by switching between different pre-computed representatives of the non-systematic mapping function by table look-up.

8. OFDM receiver comprising
a transformer (52) configured to transfer an OFDM time domain symbol from time domain to frequency domain to obtain N frequency domain samples;
a data estimator (54) configured to determine an estimate for $N_d$ data symbols (64) from the $N$ frequency domain samples with $N > N_d$ assuming that the $N_d$ data symbols $\tilde{\mathbf{d}}$ have been mapped onto $N_d + N_r \leq N$ of the $N$ frequency domain samples using a non-systematic mapping function $\breve{\mathbf{G}}$ describing a non-systematic code so that the $N_d$ data symbols do not appear in $\breve{\mathbf{G}}\,\tilde{\mathbf{d}}$ such that the OFDM time domain symbol (36) comprises a predetermined portion of a predetermined value independent from the $N_d$ data symbols.

9. OFDM receiver according to claim 8, wherein the data estimator is configured to perform the determination assuming that the $N_d$ data symbols have been mapped onto the $N$ frequency domain samples using the non-systematic mapping function such that the predetermined value is zero, and to perform a subtraction of a transmission-channel-formed spectrum of a unique word with respect to the $N_d + N_r$ of the $N$ frequency domain samples.

10. OFDM receiver according to claim 8 or 9, wherein that data estimator (54) is configured such that $N > N_d + N_r$ and to disregard frequency domain samples other than the $N_d + N_r$ of the frequency domain samples as zero subcarriers.

**11.** OFDM receiver according to any of claims 8 to 10, wherein the data estimator is configured to determine the estimate for the $N_d$ data symbols to correspond to that set of possible symbol alphabet values for the $N_d$ data symbols for which a predetermined measure of a deviation between a function target of the estimate of the $N_d$ data symbols according to the mapping using the non-systematic mapping function on the one hand, and the $N_d + N_r$ of the $N$ frequency domain samples as obtained by the transformer, on the other hand, is minimum.

**12.** OFDM receiver according to any of claims 8 to 11, wherein the data estimator (54) is configured to determine the estimate for the $N_d$ data symbols using an LMMSE or BLUE estimator.

**13.** OFDM receiver according to any of the claims 8 to 12, wherein the data estimator is configured to perform the determination assuming that the $N_d$ data symbols have been mapped onto the N frequency domain samples using the non-systematic mapping function such that the non-systematic mapping function is a $(N_d + N_r)$ x $N_d$ matrix $\breve{\mathbf{G}}$ obeying

$$\breve{\mathbf{G}} = \mathbf{A}\mathbf{P}\begin{bmatrix} \mathbf{I} \\ \breve{\mathbf{T}} \end{bmatrix}$$

with $\breve{\mathbf{T}}$ being a $N_r$ x $N_d$ matrix constructed according to

$$\breve{\mathbf{T}} = -(\breve{\mathbf{M}}_{22})^{-1}\breve{\mathbf{M}}_{21}$$

from a $N_r$ x $N_r$ submatrix $\breve{\mathbf{M}}_{22}$ and a $N_r$ x $N_d$ submatrix $\breve{\mathbf{M}}_{21}$ of

$$\breve{\mathbf{M}} = \mathbf{F}_N^{-1}\mathbf{B}\mathbf{A}\mathbf{P} = \begin{bmatrix} \breve{\mathbf{M}}_{11} & \breve{\mathbf{M}}_{12} \\ \breve{\mathbf{M}}_{21} & \breve{\mathbf{M}}_{22} \end{bmatrix},$$

where $\mathbf{F}_N$ is a length-$N$-DFT matrix, $\mathbf{B}$ is a $N$ x $(N_d + N_r)$ matrix resulting from a $(N_d + N_r)$ x $(N_d + N_r)$ unity matrix by inserting $N - N_d - N_r$ zero rows wherein $\mathbf{P}$ is a $(N_d + N_r)$ x $(N_d + N_r)$ permutation matrix and $\mathbf{A}$ is a $(N_d + N_r)$ x $(N_d + N_r)$ non-singular matrix so that

$$\mathbf{F}_N^{-1}\mathbf{B}\mathbf{A}\mathbf{P}\begin{bmatrix} \mathbf{I} \\ \breve{\mathbf{T}} \end{bmatrix} = \begin{bmatrix} \star \\ \mathbf{0} \end{bmatrix}.$$

**14.** OFDM receiver according to any of claims 8 to 13, wherein the data estimator is configured to perform the determination assuming that the $N_d$ data symbols have been mapped onto the N frequency domain samples using the non-systematic mapping function such that the non-systematic mapping function is a $(N_d + N_r)$ x $N_d$ matrix $\breve{\mathbf{G}}$ satisfying

$$\breve{\mathbf{G}}^H\breve{\mathbf{G}} = s^2\mathbf{I}$$

*and*

$$\mathbf{F}_N^{-1}\mathbf{B}\breve{\mathbf{G}} = \begin{bmatrix} \star \\ \mathbf{0} \end{bmatrix},$$

wherein s is a common singular value of $\breve{\mathbf{G}}$, $\mathbf{F}_N$ is a length-$N$-DFT matrix and $\mathbf{B}$ is a $N$ x ($N_d + N_r$) matrix resulting from a ($N_d + N_r$) x ($N_d + N_r$) unity matrix by inserting $N - N_d - N_r$ zero rows.

**15.** OFDM transmission method comprising
mapping $N_d$ data symbols (20) onto $N$ frequency domain samples (22), $\tilde{\mathbf{d}}$, with $N > N_d$;
transferring the $N$ frequency domain samples (22) from frequency domain to time domain to obtain an OFDM time domain symbol (24),

wherein the mapping is performed using a non-systematic mapping function $\breve{\mathbf{G}}$ describing a non-systematic code so that the $N_d$ data symbols do not appear in $\breve{\mathbf{G}}\tilde{\mathbf{d}}$ to map the $N_d$ data symbols onto $N_d + N_r \leq N$ of the $N$ frequency domain samples such that the OFDM time domain symbol (24) comprises a predetermined portion of a predetermined value independent from the $N_d$ data symbols.

**16.** OFDM receiving method comprising
transferring an OFDM time domain symbol from time domain to frequency domain to obtain N frequency domain samples;
determining an estimate for $N_d$ data symbols (64) from the $N$ frequency domain samples with $N > N_d$ assuming that the $N_d$ data symbols $\tilde{\mathbf{d}}$ have been mapped onto $N_d + N_r \leq N$ of the $N$ frequency domain samples using a non-

systematic mapping function $\breve{\mathbf{G}}$ describing a non-systematic code so that the $N_d$ data symbols do not appear in

$\breve{\mathbf{G}}\tilde{\mathbf{d}}$ such that the OFDM time domain symbol (36) comprises a predetermined portion of a predetermined value independent from the $N_d$ data symbols.

**17.** Computer program having a program code for performing, when running on a computer, a method according to claim 15 or 16.

**Patentansprüche**

**1.** OFDM-Sender, der folgende Merkmale aufweist:

einen Abbilder (12), der ausgebildet ist, um $N_d$ Datensymbole (20), $\tilde{\mathbf{d}}$, auf $N$ Fre-quenzbereichsabtastwerte (22) abzubilden, wobei $N > N_d$ gilt;
einen Invers-Transformierer (14), der ausgebildet ist, um die $N$-Frequenzbereichs-abtastwerte (22) aus dem Frequenzbereich in den Zeitbereich zu übertragen, um ein OFDM-Zeitbereichssymbol (24) zu erhalten,

wobei der Abbilder ausgebildet ist, um eine nicht systematische Abbildungsfunktion $\breve{\mathbf{G}}$ zu verwenden, die einen nicht systematischen Code beschreibt, so dass die $N_d$ Datensymbole nicht in $\breve{\mathbf{G}}\tilde{\mathbf{d}}$ erscheinen, um die $N_d$ Datensymbole auf $N_d + N_r \leq N$ der $N$ Frequenzbereichsabtastwerte abzubilden, derart, dass das OFDM-Zeitbereichssymbol (24) einen vorbestimmten Abschnitt eines vorbestimmten Werts aufweist, der unabhängig von den $N_d$ Datensymbolen ist.

**2.** OFDM-Sender gemäß Anspruch 1, bei dem der Abbilder derart ausgebildet ist, dass der vorbestimmte Wert null ist, und der OFDM-Sender ferner einen Eindeutiges-Wort-Einfüger (32) aufweist, der ausgebildet ist, um ein eindeutiges Wort (35) an dem vorbestimmten Abschnitt (30) des OFDM-Symbols (24) einzufügen, um ein OFDM-Sendesymbol (36) zu erhalten.

**3.** OFDM-Sender gemäß einem der Ansprüche 1 oder 2, bei dem der OFDM-Abbilder (12) derart ausgebildet ist, dass $N > N_d + N_r$ gilt, sowie um Null-Teilträger neben den $N_d + N_r$ Frequenzbereichsabtastwerten einzufügen.

**4.** OFDM-Sender gemäß einem der vorherigen Ansprüche, bei dem der Abbilder (12) derart ausgebildet ist, dass die nicht systematische Abbildungsfunktion eine ($N_d + N_r$) x $N_d$-Matrix $\breve{\mathbf{G}}$ ist, die

$$\breve{G} = AP \begin{bmatrix} I \\ \breve{T} \end{bmatrix}$$

unterliegt, wobei $\breve{T}$ eine $N_r$ x $N_d$-Matrix ist, die gemäß

$$\breve{T} = -(\breve{M}_{22})^{-1}\breve{M}_{21}$$

aus einer $N_r$ x $N_r$-Teilmatrix $\breve{M}_{22}$ und einer $N_r$ x $N_d$-Teilmatrix $\breve{M}_{21}$ von

$$\breve{M} = F_N^{-1}BAP = \begin{bmatrix} \breve{M}_{11} & \breve{M}_{12} \\ \breve{M}_{21} & \breve{M}_{22} \end{bmatrix}$$

aufgebaut ist, wobei $F_N$ eine Län-ge-N-DFT-Matrix ist, $B$ eine $N$ x $(N_d + N_r)$-Matrix ist, die aus einer $(N_d + N_r)$ x $(N_d + N_r)$-Einheitsmatrix resultiert, durch Einfügen von $N - N_d - N_r$ Null-Reihen, wobei $P$ eine $(N_d + N_r)$ x $(N_d + N_r)$-Permutationsmatrix ist und $A$ eine $(N_d + N_r)$ x $(N_d + N_r)$-Nicht-Singulär-Matrix ist, so dass

$$F_N^{-1}BAP \begin{bmatrix} I \\ \breve{T} \end{bmatrix} = \begin{bmatrix} * \\ 0 \end{bmatrix}$$

gilt.

5. OFDM-Sender gemäß einem der vorherigen Ansprüche, bei dem der Abbilder derart ausgebildet ist, dass die nicht systematische Abbildungsfunktion eine $(N_d + N_r)$ x $N_d$-Matrix $\breve{G}$ ist, die

$$\breve{G}^H \breve{G} = s^2 I$$

erfüllt, sowie

$$F_N^{-1}B\breve{G} = \begin{bmatrix} * \\ 0 \end{bmatrix},$$

wobei s ein gemeinsamer singulärer Wert von $\breve{G}$ ist, $F_N$ eine Länge-$N$-DFT-Matrix ist und $B$ eine $N$ x $(N_d + N_r)$-Matrix ist, die aus einer $(N_d + N_r)$ x $(N_d + N_r)$-Einheitsmatrix resultiert, durch Einfügen von $N$-$N_d$-$N_r$ Null-Reihen.

6. OFDM-Sender gemäß einem der vorherigen Ansprüche, bei dem der Abbilder ausgebildet ist, um die nicht systematische Abbildungsfunktion $\breve{G}$ in Abhängigkeit von Informationen über einen Übertragungskanal, die von einem OFDM-Empfänger empfangen werden, zu variieren.

7. OFDM-Sender gemäß einem der vorherigen Ansprüche, bei dem der Abbilder ausgebildet ist, um die nicht systematische Abbildungsfunktion $\breve{G}$ durch Umschalten zwischen unterschiedlichen vorberechneten Vertretern der nicht systematischen Abbildungsfunktion durch Tabellen-Nachschlagen zu variieren.

8. OFDM-Empfänger, der folgende Merkmale aufweist:

einen Transformierer (52), der ausgebildet ist, um ein OFDM-Zeitbereichssymbol aus dem Zeitbereich in den Frequenzbereich zu übertragen, um $N$ Frequenzbe-reichsabtastwerte zu erhalten;
einen Datenschätzer (54), der ausgebildet ist, um einen Schätzwert für $N_d$ Datensymbole (64) aus den $N$ Frequenzbereichsabtastwerten zu bestimmen, wobei $N > N_d$ gilt, unter der Annahme, dass die $N_d$ Datensymbole $\tilde{\mathbf{d}}$ unter Verwendung einer nicht systematischen Abbildungsfunktion $\breve{\mathbf{G}}$, die einen nicht systematischen Code beschreib, auf $N_d + N_r \leq N$ der $N$ Frequenzbereichsabtastwerte abgebildet wurden, so dass die $N_d$ Datensymbole nicht in $\breve{\mathbf{G}}\, \tilde{\mathbf{d}}$ erscheinen, so dass das OFDM-Zeitbereichssymbol (36) einen vorbestimmten Abschnitt eines vorbestimmten Werts, der unabhängig von den $N_d$ Datensymbolen ist, aufweist.

9. OFDM-Empfänger gemäß Anspruch 8, bei dem der Datenschätzer ausgebildet ist, um die Bestimmung unter der Annahme durchzuführen, dass die $N_d$ Datensymbole unter Verwendung der nicht systematischen Abbildungsfunktion auf die $N$ Frequenzbereichsabtastwerte abgebildet wurden, derart, dass der vorbestimmte Wert null ist, sowie um eine Subtraktion eines durch den Übertragungskanal gebildeten Spektrums eines eindeutigen Worts in Bezug auf die $N_d + N_r$ der $N$ Frequenzbereichsabtastwerte durchzuführen.

10. OFDM-Empfänger gemäß Anspruch 8 oder 9, bei dem der Datenschätzer (54) derart ausgebildet ist, dass $N > N_d + N_r$ gilt, sowie um andere Frequenzbereichsabtastwerte als die $N_d + N_r$ der Frequenzbereichsabtastwerte als Null-Teilträger zu ignorie-ren.

11. OFDM-Empfänger gemäß einem der Ansprüche 8 bis 10, bei dem der Datenschätzer ausgebildet ist, um den Schätzwert für die $N_d$ Datensymbole zu bestimmen, damit dieser dem Satz möglicher Symbol-Alphabet-Werte für die $N_d$ Datensymbole entspricht, für den ein vorbestimmtes Maß einer Abweichung zwischen einer Zielfunktion des Schätzwerts der $N_d$ Datensymbole gemäß der Abbildung unter Verwendung der nicht systematischen Abbildungsfunktion einerseits und den $N_d + N_r$ der $N$ Frequenzbereichsabtastwerte, wie durch den Transformierer erhalten, andererseits minimal ist.

12. OFDM-Empfänger gemäß einem der Ansprüche 8 bis 11, bei dem der Datenschätzer (54) ausgebildet ist, um den Schätzwert für die $N_d$ Datensymbole unter Verwendung eines LMMSE- oder BLUE-Schätzers zu bestimmen.

13. OFDM-Empfänger gemäß einem der Ansprüche 8 bis 12, bei dem der Datenschätzer ausgebildet ist, um die Bestimmung unter der Annahme durchzuführen, dass die $N_d$ Datensymbole unter Verwendung der nicht systematischen Abbildungsfunktion auf die $N$ Frequenzbereichsabtastwerte abgebildet wurden, derart, dass die nicht systematische Abbildungsfunktion eine $(N_d + N_r) \times N_d$-Matrix $\breve{\mathbf{G}}$ ist, die

$$\breve{\mathbf{G}} = \mathbf{AP}\begin{bmatrix} \mathbf{I} \\ \hline \breve{\mathbf{T}} \end{bmatrix}$$

unterliegt, wobei $\breve{\mathbf{T}}$ eine $N_r \times N_d$-Matrix ist, die gemäß

$$\breve{\mathbf{T}} = -(\breve{\mathbf{M}}_{22})^{-1}\breve{\mathbf{M}}_{21}$$

aus einer $N_r \times N_r$-Teilmatrix $\breve{\mathbf{M}}_{22}$ und einer $N_r \times N_d$-Teilmatrix $\breve{\mathbf{M}}_{21}$ von

$$\breve{\mathbf{M}} = \mathbf{F}_N^{-1}\mathbf{BAP} = \begin{bmatrix} \breve{\mathbf{M}}_{11} & \breve{\mathbf{M}}_{12} \\ \breve{\mathbf{M}}_{21} & \breve{\mathbf{M}}_{22} \end{bmatrix}$$

aufgebaut ist, wobei $\mathbf{F}_N$ eine Länge-N-DFT-Matrix ist, $\mathbf{B}$ eine $N \times (N_d + N_r)$-Matrix ist, die aus einer $(N_d + N_r) \times (N_d$

+ $N_r$)-Einheitsmatrix resultiert, durch Einfügen von $N - N_d - N_r$ Null-Reihen, wobei **P** eine $(N_d + N_r)$ x $(N_d + N_r)$-Permutationsmatrix ist und **A** eine $(N_d + N_r)$ x $(N_d + N_r)$-Nicht-Singulär-Matrix ist, so dass

$$\mathbf{F}_N^{-1}\mathbf{BAP}\begin{bmatrix} \mathbf{I} \\ \breve{\mathbf{T}} \end{bmatrix} = \begin{bmatrix} * \\ \mathbf{0} \end{bmatrix}$$

gilt.

14. OFDM-Empfänger gemäß einem der Ansprüche 8 bis 13, bei dem der Datenschätzer ausgebildet ist, um die Bestimmung unter der Annahme durchzuführen, dass die $N_d$ Datensymbole unter Verwendung der nicht systematischen Abbildungsfunktion auf die $N$ Frequenzbereichsabtastwerte abgebildet wurden, derart, dass die nicht systematische Abbildungsfunktion eine $(N_d + N_r)$ x $N_d$-Matrix $\breve{\mathbf{G}}$ ist, die

$$\breve{\mathbf{G}}^H \breve{\mathbf{G}} = s^2 \mathbf{I}$$

erfüllt, sowie

$$\mathbf{F}_N^{-1}\mathbf{B}\breve{\mathbf{G}} = \begin{bmatrix} * \\ \mathbf{0} \end{bmatrix},$$

wobei s ein gemeinsamer singulärer Wert von $\breve{\mathbf{G}}$ ist, $\mathbf{F}_N$ eine Länge-$N$-DFT-Matrix ist und **B** eine $N$ x $(N_d + N_r)$-Matrix ist, die aus einer $(N_d + N_r)$ x $(N_d + N_r)$-Einheitsmatrix resultiert, durch Einfügen von $N - N_d - N_r$ Null-Reihen.

15. OFDM-Sendeverfahren, das folgende Schritte aufweist:

Abbilden von $N_d$ Datensymbolen (20) auf $N$ Frequenzbereichsabtastwerte (22), $\tilde{\mathbf{d}}$, wobei $N > N_d$ gilt;
Übertragen der $N$ Frequenzbereichsabtastwerte (22) aus dem Frequenzbereich in den Zeitbereich, um ein OFDM-Zeitbereichssymbol (24) zu erhalten,

wobei die Abbildung unter Verwendung einer nicht systematischen Abbildungsfunktion $\breve{\mathbf{G}}$ durchgeführt wird, die einen nicht systematischen Code beschreibt, so dass die $N_d$ Datensymbole nicht in $\breve{\mathbf{G}}\,\tilde{\mathbf{d}}$ erscheinen, um die $N_d$ Datensymbole auf $N_d + N_r \leq N$ der $N$ Frequenzbereichsabtastwerte abzubilden, derart, dass das OFDM-Zeitbereichssymbol (24) einen vorbestimmten Abschnitt eines vorbestimmten Werts aufweist, der unabhängig von den $N_d$ Datensymbolen ist.

16. OFDM-Empfangsverfahren, das folgende Schritte aufweist:

Übertragen eines OFDM-Zeitbereichssymbols aus dem Zeitbereich in den Frequenzbereich, um $N$ Frequenzbereichsabtastwerte zu erhalten;
Bestimmen eines Schätzwerts für $N_d$ Datensymbole (64) aus den $N$ Frequenzbereichsabtastwerten, wobei $N > N_d$ gilt, unter der Annahme, dass die $N_d$ Datensymbole $\tilde{\mathbf{d}}$ unter Verwendung einer nicht systematischen Abbildungsfunktion $\breve{\mathbf{G}}$, die einen nicht systematischen Code beschreibt, auf $N_d + N_r \leq N$ der $N$ Frequenzbereichsabtastwerte abgebildet wurden, so dass die $N_d$ Datensymbole nicht in $\breve{\mathbf{G}}\,\tilde{\mathbf{d}}$ erscheinen, so dass das OFDM-Zeitbereichssymbol (36) einen vorbestimmten Abschnitt eines vorbestimmten Werts, der unabhängig von den $N_d$ Datensymbolen ist, aufweist.

17. Computerprogramm mit einem Programmcode zum Durchführen eines Verfahrens gemäß Anspruch 15 oder 16, wenn dieses auf einem Computer läuft.

**Revendications**

1.  Emetteur OFDM, comprenant
    un mappeur (12) configuré pour mapper $N_d$ symboles de données (20), $\tilde{d}$, sur $N$ échantillons dans le domaine fréquentiel (22), avec $N > N_d$,
    un transformateur inverse (14) configuré pour transférer les $N$ échantillons dans le domaine fréquentiel (22) du domaine fréquentiel au domaine temporel, pour obtenir un symbole dans le domaine temporel OFDM(24),
    dans lequel le mappeur est configuré pour utiliser une fonction de mappage non systématique $\breve{\mathbf{G}}$ décrivant un code non systématique de sorte que les $N_d$ symboles de données n'apparaissent pas dans $\breve{\mathbf{G}}\,\tilde{d}$, pour mapper les $N_d$ symboles de données sur $N_d + N_r \leq N$ des $N$ échantillons dans le domaine fréquentiel, de sorte que le symbole dans le domaine temporel OFDM (24) comprenne une partie prédéterminée d'une valeur prédéterminée indépendante des $N_d$ symboles de données.

2.  Emetteur OFDM selon la revendication 1, dans lequel le mappeur est configuré de sorte que la valeur prédéterminée soit zéro et l'émetteur OFDM comprend par ailleurs un seul inserteur de mot (32) configuré pour insérer un seul mot (35) à la partie prédéterminée (30) du symbole OFDM (24), pour obtenir un symbole de transmission OFDM (36).

3.  Emetteur OFDM selon l'une quelconque des revendications 1 ou 2, dans lequel le mappeur OFDM (12) est configuré de sorte que $N > N_d + N_r$, et pour insérer des sous-porteuses zéro outre les $N_d + N_r$ échantillons dans le domaine fréquentiel.

4.  Emetteur OFDM selon l'une quelconque des revendications précédentes, dans lequel le mappeur (12) est configuré de sorte que la fonction de mappage non systématique soit une matrice $(N_d+N_r) \times N_d$, $\breve{\mathbf{G}}$, obéissant à

    $$\breve{G} = AP\begin{bmatrix} I \\ \breve{T} \end{bmatrix},$$
    
    $\breve{\mathbf{T}}$ étant une matrice $N_r \times N_d$ construite selon

    $$\breve{T} = -\left(\breve{M}_{22}\right)^{-1} \breve{M}_{21}$$

    à partir d'une sous-matrice $N_r \times N_r$, $\breve{\mathbf{M}}_{22}$ et d'une sous-matrice $N_r \times N_d$, $\breve{\mathbf{M}}_{21}$ de

    $$\breve{M} = F_N^{-1} BAP =$$

    $$\begin{bmatrix} \breve{M}_{11} \breve{M}_{12} \\ \breve{M}_{21} \breve{M}_{22} \end{bmatrix},$$

    où $\mathbf{F}_N$ est une matrice DFT de longueur $N$, $\mathbf{B}$ est une matrice $N \times (N_d+N_r)$ résultant d'une matrice unitaire $(N_d+N_r) \times (N_d+N_r)$ par insertion de $N - N_d - N_r$ rangées de zéros, où P est une matrice de permutation $(N_d+N_r) \times (N_d+N_r)$ et A est une matrice non singulière $(N_d+N_r) \times (N_d+N_r)$, de sorte que

    $$F_N^{-1} BAP \begin{bmatrix} I \\ \breve{T} \end{bmatrix} = \begin{bmatrix} * \\ 0 \end{bmatrix}.$$

5.  Emetteur OFDM selon l'une quelconque des revendications précédentes, dans lequel le mappeur est configuré de sorte que la fonction de mappage non systématique soit une matrice $(N_d+N_r) \times N_d$, $\breve{\mathbf{G}}$, satisfaisant

$$\breve{G}^H \breve{G} = s^2 I$$

et

$$F_N^{-1} \bar{B} \breve{G} = \begin{bmatrix} * \\ 0 \end{bmatrix},$$

où s est une valeur singulière commune de $\breve{\mathbf{G}}$, $\mathbf{F}_N$ est une matrice DFT de longueur $N$ et $\mathbf{B}$ est une matrice $N$ x $(N_d+N_r)$ résultante d'une matrice unitaire $(N_d+N_r)$ x $(N_d+N_r)$ par insertion de $N$- $N_d$ -$N_r$ rangées de zéros.

6. Emetteur OFDM selon l'une quelconque des revendications précédentes, dans lequel le mappeur est configuré pour faire varier la fonction de mappage non systématique $\breve{\mathbf{G}}$ en fonction des informations sur un canal de transmission reçues d'un récepteur OFDM.

7. Emetteur OFDM selon l'une quelconque des revendications précédentes, dans lequel le mappeur est configuré pour faire varier la fonction de mappage non systématique $\breve{\mathbf{G}}$ en commutant entre différents représentants précalculés de la fonction de mappage non systématique par un tableau de consultation.

8. Récepteur OFDM, comprenant
un transformateur (52) configuré pour transférer un symbole dans le domaine temporel OFDM du domaine temporel au domaine fréquentiel, pour obtenir N échantillons dans le domaine fréquentiel;
un estimateur de données (54) configuré pour déterminer une estimation pour $N_d$ symboles de données (64) à partir des $N$ échantillons dans le domaine, $N > N_d$ en supposant que les $N_d$ symboles de données $\tilde{d}$ ont été mappés sur $N_d + N_r \leq N$ des $N$ échantillons dans le domaine fréquentiel à l'aide d'une fonction de mappage non systématique $\breve{\mathbf{G}}$ décrivant un code non systématique, de sorte que les $N_d$ symboles de données n'apparaissent pas dans $\breve{\mathbf{G}}$ $\tilde{d}$, de sorte que le symbole dans le domaine temporel OFDM (36) comprenne une partie prédéterminée d'une valeur prédéterminée indépendante des $N_d$ symboles de données.

9. Récepteur OFDM selon la revendication 8, dans lequel l'estimateur de données est configuré pour effectuer la détermination en supposant que les $N_d$ symboles de données ont été mappées sur les $N$ échantillons dans le domaine fréquentiel à l'aide de la fonction de mappage non systématique, de sorte que la valeur prédéterminée soit égale à zéro, et pour effectuer une soustraction d'un spectre formé par canal de transmission d'un seul mot par rapport aux $N_d + N_r$ des $N$ échantillons dans le domaine fréquentiel.

10. Récepteur OFDM selon la revendication 8 ou 9, dans lequel l'estimateur de données (54) est configuré de manière que $N > N_d + N_r$ et à ne pas tenir compte des échantillons dans le domaine fréquentiel autres que les $N_d + N_r$ des échantillons dans le domaine fréquentiel comme sous-porteuses zéro.

11. Récepteur OFDM selon l'une quelconque des revendications 8 à 10, dans lequel l'estimateur de données est configuré pour déterminer l'estimation de sorte que les $N_d$ symboles de données correspondent à l'ensemble de valeurs de l'alphabet de symboles possibles pour les $N_d$ symboles de données pour lequel une mesure prédéterminée d'un écart entre une cible de fonction de l'estimation des $N_d$ symboles de données selon le mappage en à l'aide de la fonction de mappage non systématique, d'une part, et des $N_d + N_r$ des $N$ échantillons dans le domaine fréquentiel obtenus par le transformateur, d'autre part, soit minimum.

12. Récepteur OFDM selon l'une quelconque des revendications 8 à 11, dans lequel l'estimateur de données (54) est configuré pour déterminer l'estimation pour les $N_d$ symboles de données à l'aide d'un estimateur LMMSE ou BLUE.

13. Récepteur OFDM selon l'une quelconque des revendications 8 à 12, dans lequel l'estimateur de données est configuré pour effectuer la détermination en supposant que les $N_d$ symboles de données ont été mappés sur les $N$ échantillons dans le domaine fréquentiel à l'aide de la fonction de mappage non systématique de sorte que la fonction de mappage non systématique soit une matrice $(N_d+N_r)$ x $N_d$, $\breve{\mathbf{G}}$, obéissant à

$$\breve{G} = AP \begin{bmatrix} I \\ \breve{T} \end{bmatrix},$$ $\breve{\mathbf{T}}$ étant une matrice $N_r$ x $N_d$ construite selon

$$\breve{T} = -\left(\breve{M}_{22}\right)^{-1} \breve{M}_{21}$$

à partir d'une sous-matrice $N_r$ x $N_r$, $\breve{\mathbf{M}}_{22}$ et d'une sous-matrice $N_r$ x $N_d$, $\breve{\mathbf{M}}_{21}$ de

$$\breve{M} = F_N^{-1} BAP = \begin{bmatrix} \breve{M}_{11} \breve{M}_{12} \\ \breve{M}_{21} \breve{M}_{22} \end{bmatrix},$$

où $\mathbf{F}_N$ est une matrice DFT de longueur $N$, $\mathbf{B}$ est une matrice $N$ x $(N_d{+}N_r)$ résultant d'une matrice unitaire $(N_d{+}N_r)$ x $(N_d{+}N_r)$ par insertion de $N$ - $N_d$ - $N_r$ rangées de zéros, où P est une matrice de permutation $(N_d{+}N_r)$ x $(N_d{+}N_r)$ et A est une matrice non singulière $(N_d{+}N_r)$ x $(N_d{+}N_r)$, de sorte que

$$F_N^{-1} BAP \begin{bmatrix} I \\ \breve{T} \end{bmatrix} =$$

$$\begin{bmatrix} * \\ 0 \end{bmatrix}.$$

**14.** Récepteur OFDM selon l'une quelconque des revendications 8 à 13, dans lequel l'estimateur de données est configuré pour effectuer la détermination en supposant que les $N_d$ symboles de données ont été mappés sur les $N$ échantillons dans le domaine fréquentiel à l'aide de la fonction de mappage non systématique de sorte que la fonction de mappage non systématique soit une matrice $(N_d{+}N_r)$ x $N_d$, $\breve{\mathbf{G}}$,

$$\breve{G}^H \breve{G} = s^2 I$$

satisfaisant et

$$F_N^{-1} B \breve{G} = \begin{bmatrix} * \\ 0 \end{bmatrix},$$

où s est une valeur singulière commune de $\breve{\mathbf{G}}$, $\mathbf{F}_N$ est une matrice DFT de longueur $N$ et $\mathbf{B}$ est une matrice $N$ x $(N_d{+}N_r)$ résultante d'une matrice unitaire $(N_d{+}N_r)$ x $(N_d{+}N_r)$ par insertion de $N$- $N_d$ -$N_r$ rangées de zéros.

**15.** Procédé de transmission OFDM, comprenant
mapper $N_d$ symboles de données (20) sur $N$ échantillons dans le domaine fréquentiel (22), $\tilde{d}$, avec $N > N_d$,
transférer les $N_d$ échantillons dans le domaine fréquentiel (22) du domaine fréquentiel au domaine temporel, pour obtenir un symbole dans le domaine temporel OFDM (24),
dans lequel le mappage est effectué à l'aide d'une fonction de mappage non systématique $\breve{\mathbf{G}}$ décrivant un code non systématique de sorte que les $N_d$ symboles de données n'apparaissent pas dans $\breve{\mathbf{G}}$ $\tilde{d}$, pour mapper les $N_d$ symboles de données sur $N_d + N_r \leq N$ des N échantillons dans le domaine fréquentiel, de sorte que le symbole dans le domaine temporel OFDM (24) comprenne une partie prédéterminée d'une valeur prédéterminée indépendante des $N_d$ symboles de données.

**16.** Procédé de réception OFDM, comprenant

transférer un symbole dans le domaine temporel OFDM du domaine temporel au domaine fréquentiel, pour obtenir N échantillons dans le domaine fréquentiel;

déterminer une estimation pour $N_d$ symboles de données (64) à partir des $N$ échantillons dans le domaine fréquentiel, avec $N > N_d$ en supposant que les $N_d$ symboles de données $\tilde{d}$ ont été mappées sur $N_d + N_r \leq N$ des $N$ échantillons dans le domaine fréquentiel à l'aide d'une fonction de mappage non systématique $\breve{\mathbf{G}}$ décrivant un code non systématique, de sorte que les $N_d$ symboles de données n'apparaissent pas dans $G\,\tilde{d}$, de sorte que le symbole dans le domaine temporel OFDM (36) comprenne une partie prédéterminée d'une valeur prédéterminée indépendante des $N_d$ symboles de données.

**17.** Programme d'ordinateur ayant un code de programme pour réaliser, lorsqu'il est exécuté sur un ordinateur, un procédé selon la revendication 15 ou 16.

$T_{GI}$ $T_{DFT}$ $T_{DFT}$

| CP1 | data | CP1 | CP2 | data | CP2 | CP3 | · · · |

(a) data structure using CPs

| KS | data | KS | data | KS | · · · |

(b) data structure using KSP

$T_{GI}$ $T_{DFT}$ $T_{DFT}$

| UW | data | UW | data | UW | · · · |

(c) data structure using UWs

# FIG 1

FIG 2

FIG 3

FIG 4

EP 2 566 121 B1

FIG 5

FIG 6

FIG 7

FIG 8

FIG 9

FIG 10

FIG 11

FIG 12

FIG 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2337293 A1

**Non-patent literature cited in the description**

- **M. HUEMER ; C. HOFBAUER ; J.B. HUBER.** he Potential of Unique Words in OFDM. *Proceedings of the 15th International OFDM-Workshop,* September 2010, 140-144
- **A. ONIC ; M. HUEMER.** Direct versus Two-Step Approach for Unique Word Generation in UW-OFDM. *Proceedings of the 15th International OFDM-Workshop,* September 2010, 145-149
- **R. VAN NEE ; R. PRASAD.** OFDM for Wireless Multimedia Communications. Artech House Publishers, 2000
- **S. TANG ; F. YANG ; K. PENG ; C. PAN ; K. GONG ; Z. YANG.** Iterative channel estimation for block transmission with known symbol padding - a new look at TDS-OFDM. *Proceedings of the IEEE Global Telecommunications Conference (GLOBECOM 2007),* November 2007, 4269-4273
- **D. VAN WELDEN ; H. STEENDAM ; M. MOENECLAEY.** Iterative DA/DD channel estimation for KSP-OFDM. *Proceedings of the IEEE International Conference on Communications ICC 2008),* May 2008, 693-697
- **P. LIN ; S. M. PHOONG ; P. P. VAIDYANATHAN.** Filter Bank Transceivers for OFDM and DMT Systems. Cambridge University Press, 2011
- **R.E. BLAHUT.** Algebraic Codes for Data Transmission. Cambridge University Press, 2003
- **C. HOFBAUER ; M. HUEMER ; J. B. HUBER.** Coded OFDM by Unique Word Prefix. *Proceedings of the IEEE International Conference on Communication Systems (IEEE ICCS' 2010),* November 2010, 5
- **M. HUEMER ; A. ONIC ; C. HOFBAUER.** Classical and Bayesian Linear Data Estimators for Unique Word OFDM. *IEEE Transactions on Signal Processing*
- **H. SARI ; G. KARAM ; I. JEANCLAUDE.** An Analysis of Orthogonal Frequency-Division Multiplexing for Mobile Radio Applications. *Proceedings of the IEEE Vehicular Technology Conference (VTC '94),* June 1994, 1635-1639

- **H. SARI ; G. KARAM ; I. JEANCLAUDE.** Frequency-Domain Equalization of Mobile Radio and Terrestrial Broadcast Channels. *Proceedings of the IEEE International Conference on Global Communications (GLOBECOM'94),* 1994, 1-5
- **A. CZYLWIK.** Comparison between Adaptive OFDM and Single Carrier Modulation with Frequency Domain Equalization. *Proceedings of the IEEE Vehicular Technology Conference (VTC '97,* May 1997, 865-869
- **G. KADEL.** Diversity and Equalization in the Frequency Domain - a Robust and Flexible Receiver Technology for Broadband Mobile Communication Systems. *Proceedings of the IEEE Vehicular Technology Conference (VTC '97),* May 1997, 894-898
- **M. V. CLARK.** Adaptive frequency-domain equalization and diversity combining for broadband wireless communications. *IEEE Journal on Selected Areas in Communications,* October 1998, vol. 16 (8), 1385-1395
- **M. HUEMER ; L. REINDL ; A. SPRINGER ; R. WEIGEL.** Implementation Aspects on Single Carrier Transmission with Frequency Domain Equalization. *Proceedings of the 4th International OFDM-Workshop '99,* September 1999, 18.1-18.4
- Frequenzbereichsentzerrung für hochratige Eintrager-Übertragungssysteme in Umgebungen mit ausgeprägter Mehrwegeausbreitung. **M. HUEMER.** Dissertation. Institute for Communications and Information Engineering, 1999
- **L. DENEIRE ; B. GYSELINCKX ; M. ENGELS.** Training Sequence vs. Cyclic Prefix: A New Look on Single Carrier Communication. *Proceedings of the IEEE International Conference on Global Communications (GLOBECOM '2000),* November 2000, 1056-1060
- **R. CENDRILLON ; M. MOONEN.** Efficient equalizers for single and multi-carrier environments with known symbol padding. *Proceedings of the IEEE International Symposium on Signal Processing and its Applications (ISSPA 2001),* August 2001, 607-610

- **H. WITSCHNIG ; T. MAYER ; A. SPRINGER ; A. KOPPLER ; L. MAURER ; M. HUEMER ; R. WEIGEL.** A Different Look on Cyclic Prefix for SC/FDE. *Proceedings of the 13th IEEE International Symposium on Personal, Indoor and Mobile Radio Communications (PIMRC 2002,* September 2002, 824-828
- **H. WITSCHNIG ; T. MAYER ; A. SPRINGER ; L. MAURER ; M. HUEMER ; R. WEIGEL.** The Advantages of a Known Sequence versus Cyclic Prefix in an SC/FDE System. *Proceedings of the 5th International Symposium on Wireless Personal Multimedia Communications (WPMC' 2002),* October 2002, 1328-1332
- **M. HUEMER ; A. KOPPLER ; L. REINDL ; R. WEIGEL.** A Review of Cyclically Extended Single Carrier Transmission with Frequency Domain Equalization for Broadband Wireless Transmission. *European Transactions on Telecommunications (ETT),* July 2003, vol. 14 (4), 329-341
- **M. HUEMER ; H. WITSCHNIG ; J. HAUSNER.** Unique Word Based Phase Tracking Algorithms for SC/FDE Systems. *Proceedings of the IEEE International Conference on Global Communications (GLOBECOM' 2003),* December 2003, 5
- Frequency Domain Equalization for Broadband Wireless Communication - With Special Reference to Single Carrier Transmission Based on Known Pilot Sequences. **H. WITSCHNIG.** Dissertation. Institute for Communications and Information Engineering, 2004
- **S. REINHARDT ; T. BUZID ; M. HUEMER.** MIMO Extensions for SC/FDE Systems. *Proceedings of the European Conference on Wireless Technology (ECWT' 2005),* October 2005, 109-112

- **M. HUEMER ; C. HOFBAUER ; J.B. HUBER.** Unique Word Prefix in SC/FDE and OFDM: A Comparison. *Proceedings of the IEEE GLOBECOM 2010 Workshop on Broadband Single Carrier and Frequency Domain Communications (BSCFDC 2010),* December 2010, 1321-1326
- **M. MUCK ; M. DE COURVILLE ; P. DUHAMEL.** A pseudorandom postfix OFDM modulator - semi-blind channel estimation and equalization. *IEEE Transactions on Signal Processing,* March 2006, vol. 54 (3), 1005-1017
- **L. JINGYI ; P. JOO ; J. RO.** The effect of filling Unique Words to guard interval for OFDM. *Document IEEE C802.16a-02/87, IEEE 802.16 Broadband Wireless Access Working Group,* September 2002
- **C. HOFBAUER ; M. HUEMER ; J.B. HUBER.** On the Impact of Redundant Subcarrier Energy Optimization in UW-OFDM. *Proceedings of the 4th International Conference on Signal Processing and Communication Systems (ICSPCS 2010),* December 2010
- **M. HUEMER ; C. HOFBAUER ; J.B. HUBER.** Complex Number RS Coded OFDM with Systematic Noise in the Guard Interval. *Proceedings of the 44th ASILOMAR Conference on Signals, Systems and Computers,* November 2010, 1023-1027
- IEEE Std 802.11a-1999. *Part 11: Wireless LAN Medium Access Control (MAC) and Physical Layer (PHY) specifications: High-Speed Physical Layer in the 5 GHz Band,* 1999
- **S. KAY.** Fundamentals of Statistical Signal Processing: Estimation Theory. Prentice Hall, 1993
- **J. FAKATSELIS.** Criteria for 2.4 GHz PHY Comparison of Modulation Methods. *IEEE,* 1997